# EUROPEAN PATENT APPLICATION

(11) **EP 4 538 657 A1**
(43) Date of publication of application: **16.04.2025**
(21) Application number: 23819804.8
(22) Date of filing: 05.06.2023
(51) Int. Cl.: G01G 13/00, G01G 13/16, G01G 13/24, G01G 19/56

(54) **SPOON TAPPING DEVICE, AND AUTOMATIC WEIGHING DEVICE**

(30) Priority: 07.06.2022 JP 2022092194
(71) Applicant: Tanabe Engineering Corporation, Zyouetsu-shi, Niigata 942-0032 (JP); Exawizards Inc., Tokyo 105-0021 (JP); TSUMURA & CO., Minato-ku Tokyo 107-8521 (JP)
(72) Inventor: OBUNAI Takashi, Zyouetsu-shi, Niigata 942-0032 (JP); NAONO Ren, Tokyo 105-0021 (JP); MIYAZAKI Yuta, Tokyo 105-0021 (JP); OTSU Akira, Inashiki-gun, Ibaraki 300-1192 (JP); ONO Shiho, Inashiki-gun, Ibaraki 300-1192 (JP)
(74) Representative: Vossius & Partner Patentanwälte Rechtsanwälte mbB
(86) International application number: PCT/JP2023/020832
(87) International publication number: WO 2023/238824

(57) **Abstract**

Provided is a spoon tapping device and the like capable of more reliably dropping little by little a particulate material scooped into a spoon while agglomeration of the particulate material is avoided, as compared to a case in which a particulate material is dropped by continuously vibrating the spoon for a predetermined time period. A spoon tapping device (1) includes: a spoon (3) configured to scoop a particulate material; a tapping tool (4) configured to tap a part (3a) of the spoon from above; and driving equipment (5) configured to intermittently drive the tapping tool. The tapping tool (4) includes a knocking part (41) to be knocked against the part of the spoon, and a movable arm (42) configured to move, with the knocking part mounted thereon, so that the knocking part is brought into contact with the part of the spoon. The driving equipment (5) is configured to move, when the particulate material scooped into the spoon is to be dropped little by little, the movable arm so that the knocking part intermittently knocks the part of the spoon.

## Description

### Technical Field

The present invention relates to a spoon tapping device and an automatic weighing apparatus which are used when a particulate material scooped into a spoon is weighed while the particulate material is dropped little by little.

### Background Art

Hitherto, for example, a technology as described in Patent Literature 1 below has been known as a technology of scooping a particulate material formed of powder, granules, or the like to weigh out a preset amount of particulate material.

In Patent Literature 1, there is described a particulate material weighing apparatus for automatically taking out a setting amount of particulate material from a particulate material container having an opening at an upper portion thereof.

Further, Patent Literature 1 has a description about the particulate material weighing apparatus that, after the particulate material is scooped from the particulate material container with a shovel arranged at a distal end portion of an articulated arm robot, a weight of the scooped particulate material and an unweighed value of the particulate material in the particulate material container are compared with each other.

Moreover, Patent Literature 1 has a description that, when the weight of the particulate material is unequal to the unweighed value as a result of the comparison, the shovel is tilted to provide a descending slope, and a vibrator formed of a vibrating device is driven for a predetermined time period to apply a vibration to the shovel. In this manner, the particulate material in the shovel is shaken off little by little into the particulate material container.

### Citation List

### Patent Literature

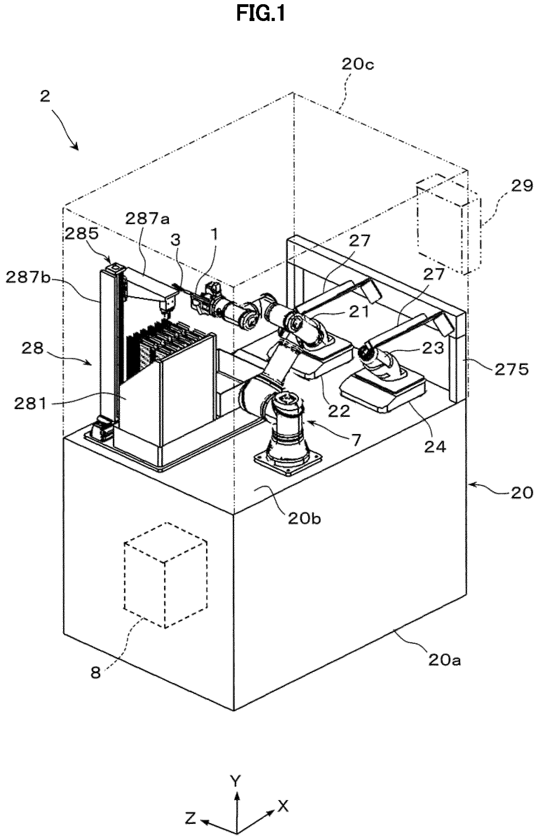

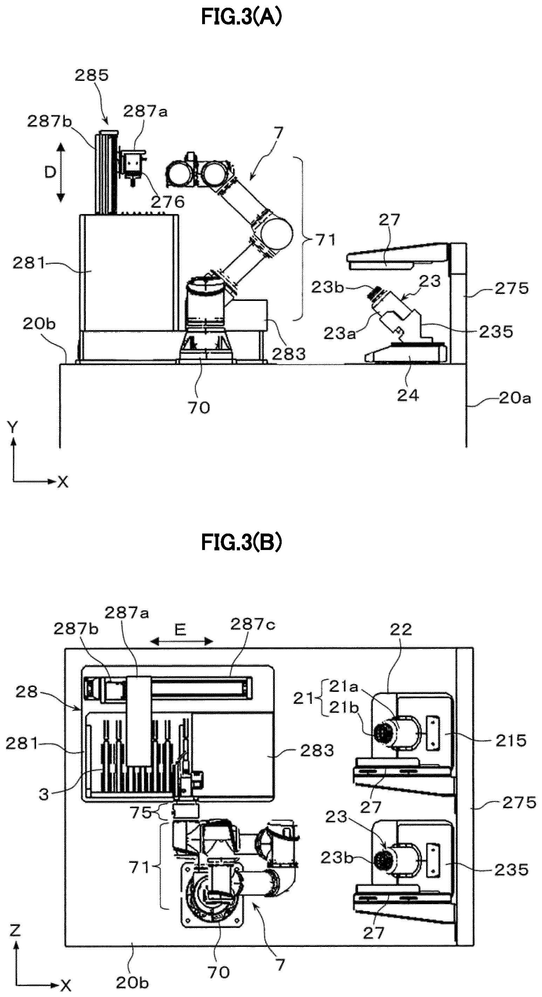

[PTL 1] JP 3-202720 A (claim 1 of the claims, line 8 of lower left column on page 5 to line 16 of upper left column on page 6, FIG. 1, and FIG. 3)

### Summary of Invention

### Technical Problem

The present invention provides a spoon tapping device capable of more reliably dropping little by little a particulate material scooped into a spoon while agglomeration of the particulate material is avoided, as compared to a case in which a particulate material is dropped by continuously vibrating the spoon for a predetermined time period. The present invention further provides an automatic weighing apparatus using the spoon tapping device.

### Solution to Problem

According to a first invention, there is provided a spoon tapping device, including:
a spoon configured to scoop a particulate material;
a tapping tool configured to tap a part of the spoon from above; and
driving equipment configured to drive the tapping tool so as to tap the part of the spoon,
wherein the tapping tool includes a knocking part to be knocked against the part of the spoon, and a movable arm configured to move under a state in which the knocking part is mounted thereon so that the knocking part is knocked against the part of the spoon, and
wherein the driving equipment is configured to move, when the particulate material scooped into the spoon is to be dropped little by little, the movable arm so that the knocking part intermittently knocks the part of the spoon.

Further, according to a second invention, there is provided an automatic weighing apparatus, including:
a first container in which the particulate material is to be stored;
a spoon configured to scoop the particulate material from the first container;
an articulated robot configured to grip the spoon and move so as to perform a plurality of types of work including scooping work of scooping the particulate material from the first container;
the spoon tapping device of the first invention described above, which is mounted on the articulated robot, and is configured to tap a part of the spoon from above when the particulate material scooped into the spoon is to be dropped into at least the first container;
a first weighing instrument configured to measure a weight of the particulate material stored in the first container; and
a control device configured to control an operation of the articulated robot and an operation of the spoon tapping device,
wherein the control device is configured to perform control so that a fine-adjustment tapping operation of intermittently tapping the part of the spoon by the spoon tapping device to perform fine adjustment is performed until a weighed amount obtained by subtracting a weight after scooping of the particulate material from a weight before the scooping of the particulate material, which are measured by the first weighing instrument, reaches an amount within an allowable range of a target weight.

### Advantageous Effects of Invention

According to the spoon tapping device of the first invention described above, the particulate material scooped into the spoon can be more reliably dropped little by little while agglomeration of the particulate material is avoided, as compared to a case in which the particulate material is dropped by continuously vibrating the spoon for a predetermined time period.

Further, according to the automatic weighing apparatus of the second invention described above, the spoon tapping device is applied. Thus, the particulate material scooped into the spoon can be more reliably dropped little by little while the agglomeration of the particulate material is avoided, as compared to the case in which the particulate material is dropped by continuously vibrating the spoon for a predetermined time period. As a result, the particulate material can be efficiently and reliably weighed.

### Brief Description of Drawings

FIG. 1 is a perspective view of an automatic weighing apparatus according to an embodiment of the present invention.
FIG. 2 is a perspective view of the automatic weighing apparatus of FIG. 1 as viewed from a different viewpoint.
FIG. 3(A) is a side view of the automatic weighing apparatus of FIG. 1.
FIG. 3(B) is a plan view of the automatic weighing apparatus of FIG. 1.
FIG. 4 is a perspective view of a part including a spoon tapping device according to an embodiment of the present invention applied to the automatic weighing apparatus.
FIG. 5 is a plan view of the part including the spoon tapping device of FIG. 4.
FIG. 6 is a perspective view of the spoon tapping device of FIG. 4.
FIG. 7(A) is a plan view of the spoon tapping device of FIG. 5.
FIG. 7(B) is a side view of the spoon tapping device of FIG. 5.
FIG. 8(A) is a plan view of a spoon.
FIG. 8(B) is a side view of the spoon.
FIG. 8(C) is a view for illustrating a state of a scooping portion when the spoon is viewed from an arrow J direction.
FIG. 9(A) is a side view for illustrating a state before or after tapping of the spoon by a tapping tool of the spoon tapping device.
FIG. 9(B) is a side view for illustrating a state at the time of tapping of the spoon by the tapping tool of the spoon tapping device.
FIG. 10 is a functional block diagram for illustrating a configuration of a control system in the automatic weighing apparatus of FIG. 1.
FIG. 11 is a flow chart for illustrating an operation example of automatic weighing performed by the automatic weighing apparatus of FIG. 1.
FIG. 12 is a flow chart for illustrating an operation example of adjusting a condition of a fine-adjustment tapping operation among operations of FIG. 11.
FIG. 13 is a side view of a main part at the time when the automatic weighing apparatus is performing scooping work.
FIG. 14(A) is a side view of the main part at the time when the automatic weighing apparatus has ended the scooping work.
FIG. 14(B) is a side view of the main part at the time when the spoon tapping device of the automatic weighing apparatus is performing the fine-adjustment tapping operation.
FIG. 15(A) is a side view for illustrating a state of the spoon when a disintegrating operation is performed.
FIG. 15(B) is a side view for illustrating a state of the spoon when the fine-adjustment tapping operation is performed.
FIG. 16 is a side view of the main part at the time when the automatic weighing apparatus is performing storage work.
FIG. 17 is a table for showing an example of results of a test using the automatic weighing apparatus.
FIG. 18 is a plan view for illustrating a positional relationship between the tapping tool in the tapping device and a spoon (3) gripped by a spoon gripping device.
FIG. 19(A) is a plan view of a spoon which is another example.
FIG. 19(B) is a side view of the spoon which is the another example.
FIG. 19(C) is a view for illustrating a state of a scooping portion when the spoon which is the another example is viewed from the arrow J direction.

### Description of Embodiments

Now, an embodiment of the present invention is described with reference to the attached drawings.

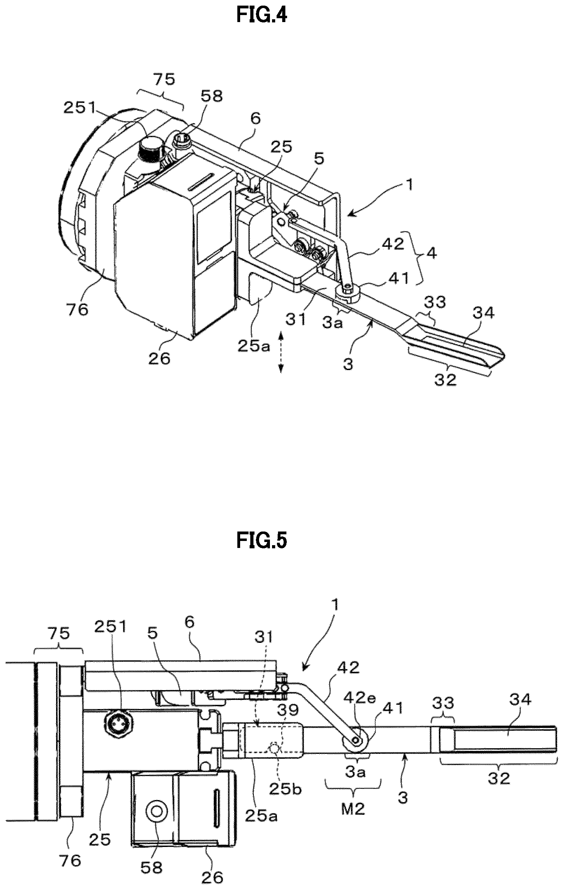

FIG. 1 to FIGS. 3 are illustrations of an automatic weighing apparatus 2 to which a spoon tapping device 1 according to the embodiment of the present invention is applied. FIG. 4 to FIG. 6 are illustrations of the spoon tapping device 1 and the like.

### (Configuration of Automatic Weighing Apparatus)

The automatic weighing apparatus 2 according to the embodiment includes, as illustrated in FIG. 1 to FIGS. 3, a first container 21, a first weighing instrument 22, a spoon 3, the spoon tapping device 1, a second container 23, a second weighing instrument 24, an articulated robot 7, a control device 8, and the like.

Reference symbol 20 in FIG. 1 and the like, represents a work table of the automatic weighing apparatus 2.

The automatic weighing apparatus 2 is basically configured to perform work of scooping a particulate material 9 stored in the first container 21 with the spoon 3 held and operated by the articulated robot 7 and weighing the particulate material 9, and then storing, into the second container 23, the particulate material 9 up to such an amount that a total amount of the scooped particulate material 9 reaches an allowable range of a target weight.

Further, the automatic weighing apparatus 2 is also configured to perform, when the particulate material 9 scooped into the spoon 3 is weighed while the particulate material 9 is dropped little by little into the first container 21, an operation of tapping the spoon 3 that has scooped the particulate material 9, by the spoon tapping device 1.

The first container 21 is a container for storing the particulate material 9 subjected to weighing. The first container 21 includes, as illustrated in FIG. 3(B), a main body portion 21a in which the particulate material 9 is to be stored, and an opening portion 21b having a size and a shape that allow scooping work of scooping the particulate material 9 with the spoon 3 to be performed. The sizes and the shapes of the main body portion 21a and the opening portion 21b are not particularly limited as long as a required amount of particulate material 9 can be stored. The opening portion 21b is closed with a lid (not shown) when, for example, the particulate material 9 is not taken in or out.

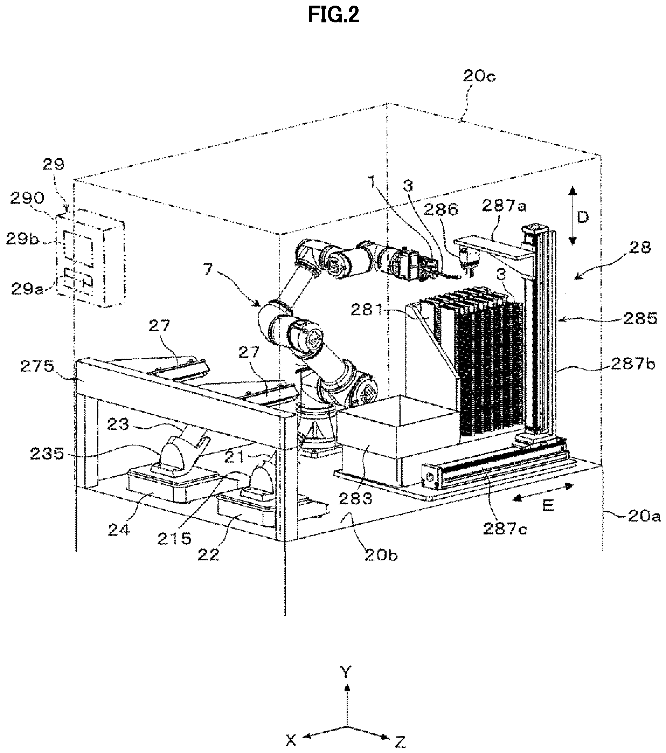

The first container 21 is installed on, as illustrated in FIG. 2 and FIGS. 3, a placement stage 215 including a placement portion that allows the first container 21 to be placed thereon in such a posture that the opening portion 21b is tilted so as to be directed obliquely upward. An angle at the time of tilting the opening portion 21b obliquely upward is set so that, for example, the opening portion 21b or a bottom surface of the main body portion 21a of the first container 21 forms an angle within a range of from 30° to 45° with respect to a top plate 20b of the work table 20.

The placement stage 215 is installed on the first weighing instrument 22 under a state in which weighing can be performed by the first weighing instrument 22.

The particulate material 9 is formed of fine powdered substances or fine granulated substances. The particulate material 9 is kept in a dried state during normal times. Examples of the particulate material 9 to be applied include particulate materials used in the fields of medicines, other drugs, food, chemical materials, battery materials, electronic materials, and the like.

The second container 23 is a container for storing the particulate material 9 that has been scooped into the spoon 3 and weighed. The second container 23 includes, as illustrated in FIGS. 3, a main body portion 23a for storing the particulate material 9, and an opening portion 23b having a size and a shape that allow storage work to be performed. The storage work is work of causing a part of the spoon 3 on a distal end side (scooping portion 32 to be described later) to enter the opening portion 23b and dropping the particulate material 9. The size and the shape of the main body portion 23a are not particularly limited as long as a weighed amount of particulate material 9 can be stored. The opening portion 23b is closed with a lid (not shown) when, for example, the particulate material 9 is not taken in or out.

The second container 23 is installed on, as illustrated in FIG. 2 and FIGS. 3, a placement stage 235 including a placement portion that allows the second container 23 to be placed in such a posture that the opening portion 23b is tilted so as to be directed obliquely upward. For example, a predetermined angle at the time of tilting the opening portion 23b obliquely upward is set to fall within the range of the angles described above for the first container 21. The placement stage 235 is installed on the second weighing instrument 24 under a state in which weighing can be performed by the second weighing instrument 24.

The first weighing instrument 22 is a weighing instrument for measuring the weight of the particulate material 9 stored in the first container 21. Further, the second weighing instrument 24 is a weighing instrument for measuring the weight of the particulate material 9 stored in the second container 23.

Examples of each of the first weighing instrument 22 and the second weighing instrument 24 include an electronic scale.

The first weighing instrument 22 is used after performing adjustment such as zero reset so as to measure a weight obtained by subtracting weights of the empty first container 21 and the placement stage 215, that is, a weight of only the particulate material 9 stored in the first container 21. Further, the second weighing instrument 24 is used after adjustment so as to measure a weight obtained by subtracting weights of the empty second container 23 and the placement stage 235, that is, a weight of only the particulate material 9 stored in the second container 23.

The first weighing instrument 22 and the second weighing instrument 24 are installed at predetermined positions on the work table 20.

The work table 20 includes, as illustrated in FIG. 1 and FIG. 2, for example, a box-shaped main body 20a including the top plate 20b. Further, the work table 20 has a cover body 20c provided so as to cover and surround a space above the top plate 20b. The cover body 20c is formed to have at least a part as a see-through part, and further has at least a part with an openable and closable structure.

The articulated robot 7 is, as illustrated in FIGS. 3, a robot including an articulated arm portion 71 and a hand portion 75. The articulated robot 7 moves so as to perform a plurality of types of work including work of gripping the spoon 3 or the like and scooping the particulate material 9 from the first container 21.

The plurality of types of work are described in the following description such as in the description of an operation of automatic weighing.

The articulated robot 7 in this embodiment is, for example, a robot in which the arm portion 71 including six-axis joints is installed on a base stage 70.

Further, the articulated robot 7 adopts, as illustrated in FIG. 4, FIG. 5, and the like, as the hand portion 75, a hand portion which moves while rotatably supporting a mounting plate 76 having mounted thereon the spoon tapping device 1 and a spoon gripping device 25 for gripping the spoon 3. The hand portion 75 is configured to allow the mounting plate 76 to be rotated by at least a predetermined angle (for example, 180°) with respect to a distal end portion of the arm portion 71.

The articulated robot 7 is installed at a predetermined position of the top plate 20b of the work table 20.

The spoon 3 is a tool for scooping the particulate material 9 from the first container 21.

There is used, as the spoon 3, as illustrated in FIG. 4, FIG. 5, FIGS. 8, and the like, a spoon including an arm portion 31 having a shape which is long in one direction, and a scooping portion 32 provided with a step 33 on one end side of the arm portion 31 in its longitudinal direction.

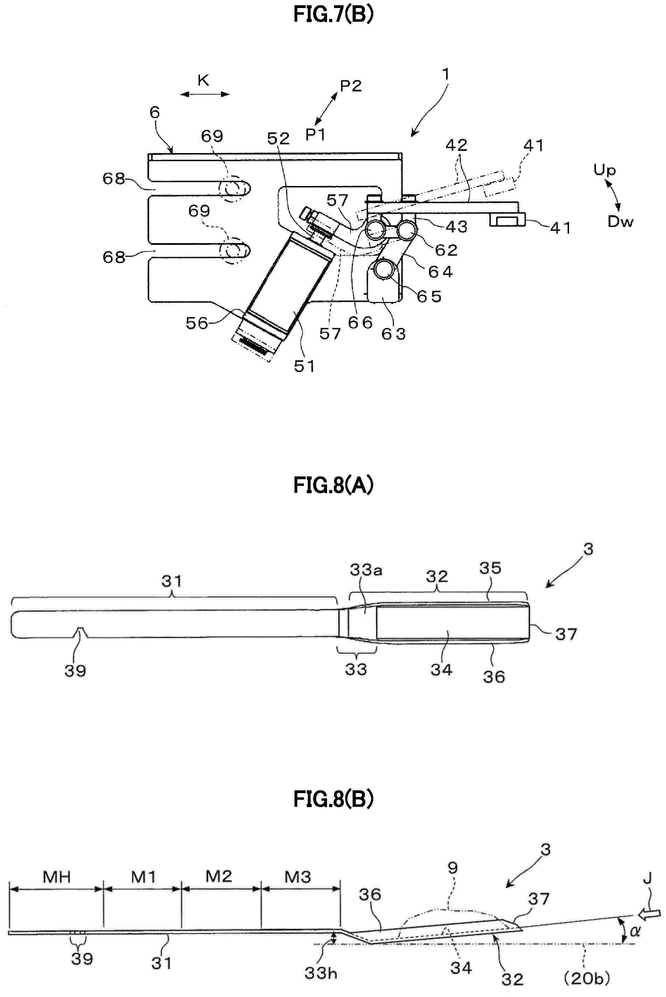

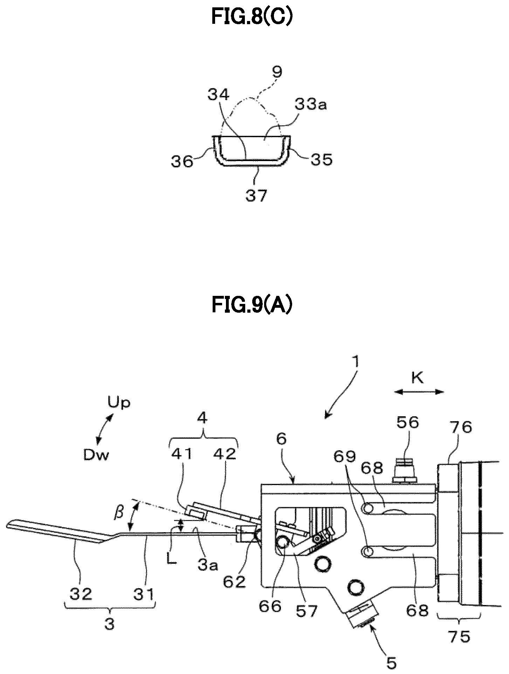

The arm portion 31 is a plate-like portion having an elongated rectangular shape. A part of the arm portion 31 is gripped by the spoon gripping device 25 at the time of use of the spoon 3. Further, in order to always grip a fixed part of the arm portion 31 at the time of gripping, the arm portion 31 may be adapted and configured to have a mark for positioning provided thereon. In this embodiment, as illustrated in FIGS. 8 and the like, a cutout portion 39 which is cut out into a shape that is tapered inward is formed in a lateral side portion of the part of the arm portion 31 to be gripped by the spoon gripping device 25.

The scooping portion 32 is, as illustrated in FIGS. 8, a portion having a shape including a bottom surface 34 on which the scooped particulate material 9 is to be placed, and side surfaces 35 and 36 which are present on both right and left sides along the one direction of the bottom surface 34 and reach a part of the step 33. The bottom surface 34 is a substantially rectangular flat surface.

Further, the scooping portion 32 has, at a distal end on a side opposite to the part of the step 33, an open end 37 formed of only the bottom surface 34 and opened without being surrounded by the side surfaces 35 and 36.

Moreover, the scooping portion 32 has, as illustrated in FIG. 8(C), a part that looks like a recessed shape whose inner side is dent as viewed from a J direction illustrated in FIG. 8(B). In other words, the scooping portion 32 has a shape in which the bottom surface 34 is surrounded by the side surfaces 35 and 36 rising from end portions on both the right and left sides of the bottom surface 34.

When the spoon 3 including the arm portion 31 and the scooping portion 32 is used, while unexpected dropping of the particulate material 9 from the scooping portion 32 is prevented, the particulate material 9 can be stably dropped from the open end 37 when the spoon 3 is tapped.

Further, the spoon 3 having such a form is sometimes referred to as, for example, a spatula.

Further, in the spoon 3 in this embodiment, as illustrated in FIG. 8(B), the bottom surface 34 of the scooping portion 32 is an inclined surface that inclines to provide a rising slope toward the distal end of the open end 37. That is, the bottom surface 34 is a surface that inclines from a point lowered downward by a height 33h of the step 33 that obliquely descends on one end side of the arm portion 31, so as to provide a rising slope that forms a predetermined angle α with respect to the longitudinal direction of the arm portion 31.

The scooped particulate material 9 is to be put on the spoon 3 within a range of the scooping portion 32 surrounded by the bottom surface 34, the side surfaces 35 and 36, and an inner surface 33a of the step 33. Accordingly, in the spoon 3, when conditions such as dimensions of the scooping portion 32 are changed, the amount of the particulate material 9 that can be scooped at a time can be adjusted.

Further, the spoon 3 is formed from, for example, stainless steel. Further, it is preferred that the spoon 3 be subjected to surface treatment such as buffing in at least a part of the scooping portion 32. When such a spoon 3 subjected to surface treatment is used, the scooped particulate material 9 is less liable to adhere to the spoon 3, and is likely to move so as to slide on the scooping portion 32.

### (Spoon Tapping Device)

The spoon tapping device 1 includes, as illustrated in FIG. 4 to FIGS. 7, and the like, the spoon 3, a tapping tool 4 for tapping a part 3a of the spoon 3 from above, and driving equipment 5 for driving the tapping tool 4 so as to tap the part 3a of the spoon 3.

The tapping tool 4 is a tool for tapping the part 3a of the spoon 3. The tapping tool 4 has, as illustrated in FIG. 4 to FIG. 6, and the like, a knocking part 41 to be knocked against the part 3a of the spoon 3, and a movable arm 42 which moves, under a state in which the knocking part 41 is mounted thereon, so that the knocking part 41 is knocked against the part 3a of the spoon 3.

The movable arm 42 is formed as, as illustrated in FIG. 5 and the like, an arm having a shape in which the movable arm 42 linearly extends and is then bent in a predetermined direction. In detail, the movable arm 42 has a shape in which, when the movable arm 42 is installed on the spoon tapping device 1, the movable arm 42 linearly extends with a distance from the arm portion 31 of the spoon 3, and is then bent so as to reach a position above the part 3a of the arm portion 31.

The movable arm 42 is formed as an elongated plate-shaped member having a predetermined width, a predetermined thickness, and a predetermined length through use of a material such as stainless steel.

Further, the knocking part 41 is mounted on a terminal portion 42e provided beyond the bent part of the movable arm 42.

The knocking part 41 has such a structure that a surface member formed from a material such as a synthetic resin, rubber, or a metal is provided on a lower surface of a core member and around the core member, and is formed as a disk-shaped member having a predetermined diameter and a predetermined thickness (height). The weight and the hardness of the knocking part 41 are selected as appropriate from the viewpoint of, for example, capable of tapping the part 3a of the spoon 3 at a predetermined strength. The knocking part 41 is mounted to the terminal portion 42e provided beyond the bent part of the movable arm 42 by, for example, fixing means such as a screw so as to be removable and replaceable.

In the spoon tapping device 1, the movable arm 42 of the tapping tool 4 is formed as an arm having the above-mentioned shape, and hence unexpected contact with the spoon 3 is less liable to occur when the tapping tool 4 taps the spoon 3, and the tapping tool 4 is less liable to interfere with the spoon 3 when the spoon 3 is gripped by, for example, the spoon gripping device 25 to be described later.

Moreover, the tapping tool 4 performs tapping by knocking the knocking part 41 against a part of the part 3a of the spoon 3, but a part of the arm portion 31 is applied as this part 3a of the spoon 3.

There is adopted, as the part of the arm portion 31, a location present in, for example, as illustrated in FIG. 8(B), an intermediate section M2 out of three sections M1, M2, and M3 obtained by equally dividing a part of the arm portion 31 excluding a part MH planned to be gripped at the time of use, into three sections in the longitudinal direction. The part of the arm portion 31 is a region having, as a center point, the middle in a width direction orthogonal to the longitudinal direction of the arm portion 31.

The region of the part of the arm portion 31 is selected in consideration of an amount and a state of the particulate material 9 to be dropped from the scooping part 32 of the spoon 3 when the tapping tool 4 performs tapping once.

When the above-mentioned section M2 of the arm portion 31 is applied as the part 3a of the spoon 3, an action at the time of tapping the spoon 3 by the tapping tool 4 is moderately transmitted to the scooping portion 32, and hence it becomes easier to adjust the dropping amount and state of the particulate material 9. In contrast, when the above-mentioned section M3 of the arm portion 31 adjacent to the scooping portion 32 is selected as the part 3a of the spoon 3, it becomes difficult to adjust the dropping amount and state of the particulate material 9 at the time of tapping the spoon 3 by the tapping tool 4.

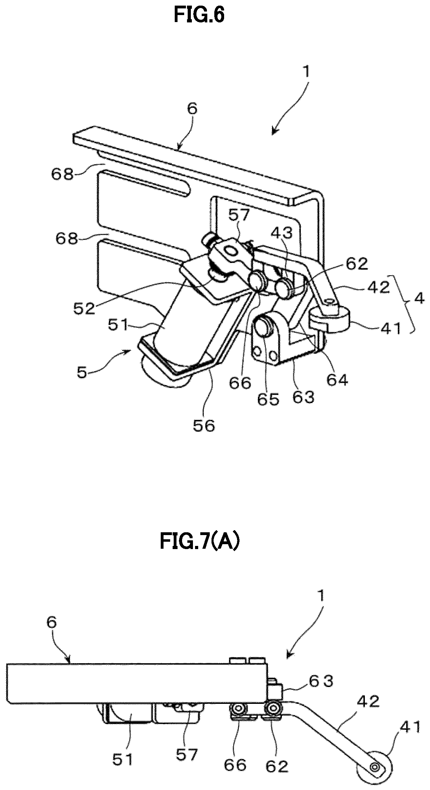

Further, the tapping tool 4 is mounted such that, as illustrated in FIG. 6, FIG. 7(B), FIGS. 9, and the like, in a support frame 6, the movable arm 42 can move vertically through use of a shaft 62 as a fulcrum. In this manner, the tapping tool 4 is configured such that, in the support frame 6, a distal end portion of the movable arm 42 on which the knocking part 41 is mounted rocks so as to reciprocate in an upward direction Up and a downward direction Dw.

Further, in the tapping tool 4, as illustrated in FIG. 6, FIG. 7(B), and the like, a bearing member 43 having a side surface formed into a recessed shape is mounted on a lower surface of the movable arm 42 on a rear end portion side that is on a side opposite to the distal end portion thereof. In the tapping tool 4, at one corner portion of a lower portion of the bearing member 43, the shaft 62 is mounted under a state in which the shaft 62 is caused to turnably pass through the bearing member 43.

The shaft 62 is not directly provided to the support frame 6, but is provided to an upper end portion of a position adjustment member 64 mounted to a bracket 63 fixed to the support frame 6. The position adjustment member 64 is mounted such that a lower end portion thereof is fixed to the bracket 63 via a fixable shaft 65. In this manner, the shaft 62 can be arranged in an adjusted manner so as to be present at a predetermined position with respect to the support frame 6.

The support frame 6 is fixed and mounted to the mounting plate 76 in the hand portion 75 of the articulated robot 7 by fixing means such as a screw. The support frame 6 may be mounted to the spoon gripping device 25 mounted to the mounting plate 75.

Further, the support frame 6 has two screw passing holes 68 each having one opened end. The two screw passing holes 68 are cut in parallel to each other. Accordingly, as illustrated in FIG. 7(B) or FIG. 9(A), the support frame 6 can be fixed by moving, under a state in which bolts 69 serving as fixing means are caused to pass through the screw passing holes 68, the bolts 69 in directions indicated by a two-headed arrow K, and then tightening the bolts 69 at predetermined positions. In this manner, the support frame 6 can be adjusted in relative mounting position with respect to the spoon 3 and the mounting plate 76.

The driving equipment 5 is, as illustrated in FIG. 6, FIGS. 7, and the like, equipment for moving the movable arm 42 so that the knocking part 41 intermittently knocks the part 3a of the spoon 3 when the particulate material 9 scooped into the spoon 3 is to be dropped little by little.

Equipment capable of moving the movable arm 42 so that the knocking part 41 intermittently knocks the part 3a of the spoon 3 is applied as the driving equipment 5, and the type and the like thereof are not particularly limited.

Further, the phrase "intermittently knocks" means knocking each time at intervals. In more detail, when tapping is performed through successive knocking, the knocking is performed so that an interval between times before and after the tapping becomes an interval having a length of 0.5 second or more, preferably an interval having a length of 1 second or more. In this manner, every time the tapping tool 4 taps the part 3a of the spoon 3 once, the time can be ensured to grasp the situation of the dropping amount of the particulate material 9, determine the necessity of the next tapping operation from this situation, and perform required adjustment of the conditions of the operation and the like.

In this embodiment, a push-type solenoid is applied as the driving equipment 5.

The solenoid serving as an example of the driving equipment 5 includes, as illustrated in FIG. 6 and the like, a main body portion 51 including a built-in electromagnetic drive type advance/retreat mechanism or the like. The main body portion 51 is mounted to the support frame 6 via a bracket 56.

Further, the solenoid serving as the driving equipment 5 includes, as illustrated in FIG. 7(B), a movable shaft 52 such as a plunger which advances and retreats in directions indicated by arrows P1 and P2 with respect to the main body portion 51.

Moreover, in the solenoid serving as the driving equipment 5, one end portion of a coupling member 57 to be coupled to the movable arm 42 of the tapping tool 4 is fixed and mounted to a distal end portion of the movable shaft 52. The coupling member 57 has another end portion turnably coupled via a shaft 66 to another corner portion of the lower portion of the bearing member 43 mounted to the movable arm 42 of the tapping tool 4.

Further, in the driving equipment 5, the main body portion 51 of the solenoid is connected to a connection terminal 58 protruding upward. A connection cable for drive (not shown) is connected to the connection terminal 58, and electric power required for drive is input through the connection cable for drive. In this manner, the driving equipment 5 is driven when receiving the electric power required for the drive as input.

When the driving equipment 5 formed of the solenoid receives electric power at the time of drive as input, the movable shaft 52 is moved by a predetermined amount in an upward direction as indicated by the arrow P1 so as to be brought to a state of protruding from the main body portion 51, and is moved in a downward direction as indicated by the arrow P2 immediately after the protrusion to return to the original position.

The connection terminal 58 is also connected to surface detection equipment 26 to be described later. That is, the connection terminal 58 functions as a terminal for inputting electric power required for driving the surface detection equipment 26 to the surface detection equipment 26, and also functions as a terminal for outputting a detection signal of the surface detection equipment 26 at the time of transmitting the detection signal.

In addition, the spoon tapping device 1 is mounted on the hand portion 75 of the articulated robot 7 through intermediation of the support frame 6 and the mounting plate 76. Meanwhile, the spoon 3 is gripped at the same position in the spoon gripping device 25 mounted to the hand portion 75 through intermediation of the mounting plate 76. The gripping at the same position is achieved by, for example, fitting a rear part of the arm portion 31 of the spoon 3 into a groove portion to be described later of the spoon gripping device 25, and positioning the cutout portion 39 of the arm portion 31 of the spoon 3 by a positioning pin 25b to be described later of the spoon gripping device 25.

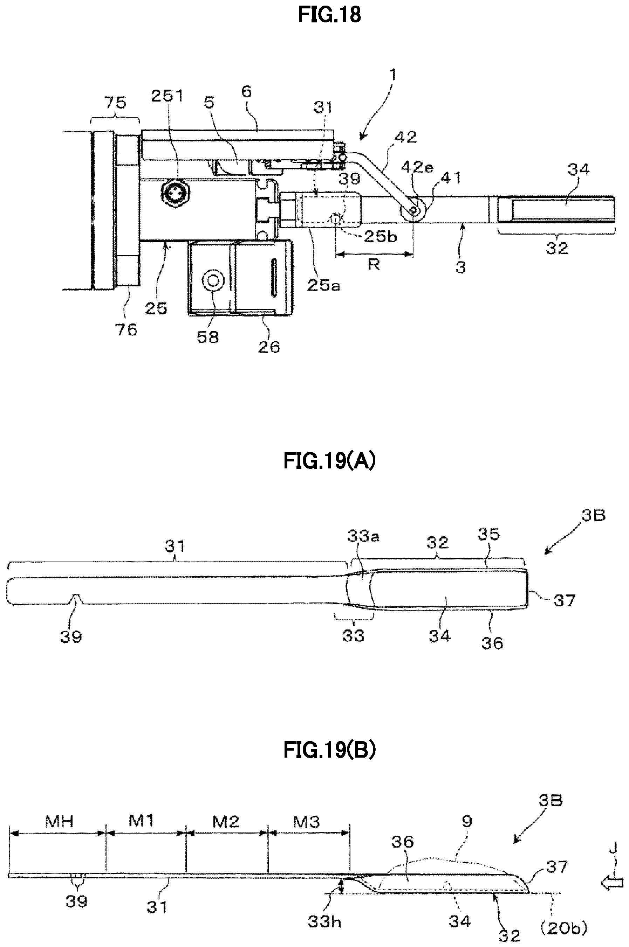

In this manner, the spoon tapping device 1, in particular, the tapping tool 4 is kept to have a substantially constant positional relationship with respect to the spoon 3 at the time when the spoon 3 is gripped by the spoon gripping device 25. The positional relationship at this time is kept such that, as illustrated in FIG. 18, a constant interval R is kept between a center of the knocking part 41 of the tapping tool 4 and a center of the cutout portion 39 of the spoon 3 or a center of the positioning pin 25b of the spoon gripping device 25. The center of the knocking part 41 is a position substantially at a center of the part that is actually used for knocking.

Further, in the spoon tapping device 1, before the tapping operation is performed (at the time of non-operation), as illustrated in FIG. 9(A), the knocking part 41 of the tapping tool 4 is held so as to remain still under a state in which the knocking part 41 is opposed to a part (part 3a of the spoon 3) that becomes a position to be tapped on the upper surface of the arm portion 31 of the spoon 3 while being separated by a predetermined distance L.

In this embodiment, as illustrated in FIG. 9(A), an angle β that is formed by a knocking surface (lower surface) of the knocking part 41 with respect to the upper surface of the arm portion 31 of the spoon 3 is set to an angle that satisfies the above-mentioned distance L.

The predetermined distance L corresponds to a length of an actuation range at the time of the tapping operation, and is, for example, about 1 cm. Further, the angle β is, for example, about 15°. The distance L and the angle β can be changed as appropriate from the viewpoint of, for example, adjusting the tapping strength.

Moreover, in the spoon tapping device 1, when the spoon 3 is to be tapped (at the time of operation), the driving equipment 5 is activated through input of electric power so that the tapping tool 4 is driven to perform tapping.

That is, in the spoon tapping device 1 at this time, the movable arm 42 of the tapping tool 4 rocks about the shaft 62 serving as a fulcrum through the drive of the solenoid serving as the driving equipment 5, and the knocking part 41 is moved in the downward direction as indicated by the arrow Dw in synchronization with this rocking.

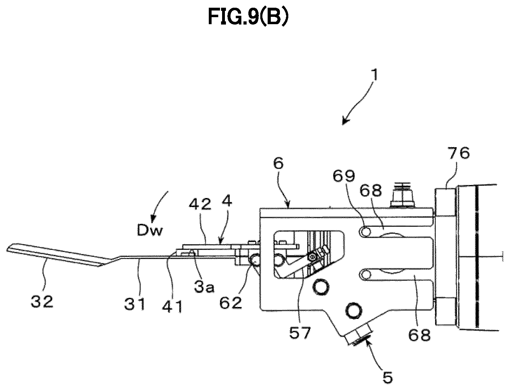

In this manner, in the spoon tapping device 1, as illustrated in FIG. 9(B), the knocking part 41 is moved by the distance L corresponding to the actuation range, and a lower surface portion of the knocking part 41 is knocked against a part of the arm portion 31 of the spoon 3 (part in the intermediate section M2: FIGS. 8) at a predetermined speed. Thus, the part 3a of the spoon 3 is tapped once.

Further, in the spoon tapping device 1, after the lower surface portion of the knocking part 41 is knocked against the part of the arm portion 31 of the spoon 3, the movable arm 42 of the tapping tool 4 rocks about the shaft 62 serving as a fulcrum in association with a returning operation of the movable shaft 52 of the solenoid serving as the driving equipment 5, and the knocking part 41 is moved in the upward direction as indicated by the arrow Up in synchronization with this rocking.

In this manner, in the spoon tapping device 1, as illustrated in FIG. 9(A), the tapping tool 4 returns to an original state before the tapping operation.

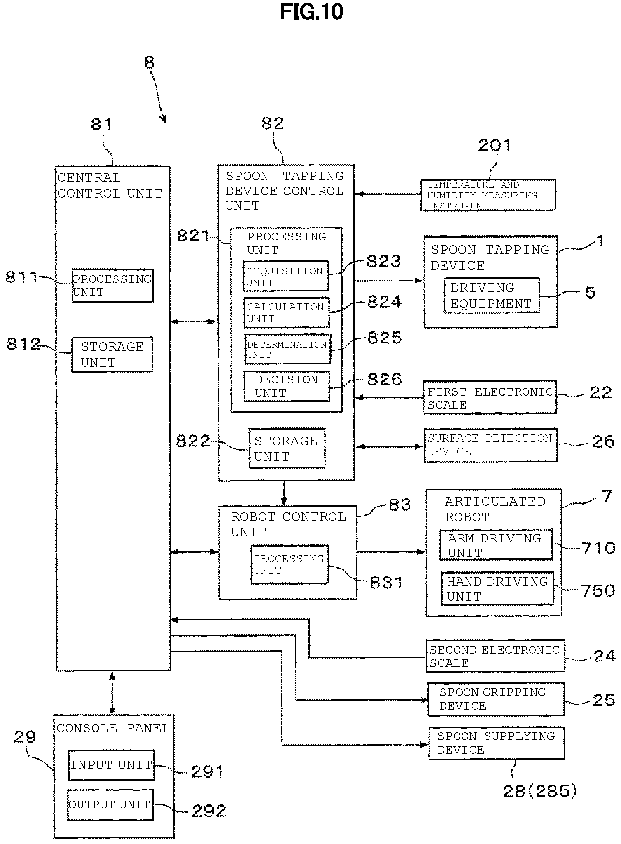

The control device 8 includes, as illustrated in FIG. 10, a central control unit 81, a device control unit 82, and a robot control unit 83. FIG. 10 shows no details of other configurations regarding operation and drive, such as supply of electric power.

The central control unit 81 is a control unit for generally controlling the entire operation of the automatic weighing apparatus 2.

The central control unit 81 includes a processing unit 811 for processing various types of information, and a storage unit 812 for storing information such as a control program and various types of data. The central control unit 81 is formed of an arithmetic processing unit, a storage element, an input/output device, and the like in terms of hardware. The device control unit 82 and the robot control unit 83 are also formed almost the same as that in the case of the central control unit 81 in terms of hardware.

The central control unit 81 is connected to the device control unit 82 and the robot control unit 83 in a form that allows communication of information, and is similarly connected to the second weighing instrument 24, and the spoon gripping device 25, a spoon supplying device 28, and a console panel 29 which are to be described later.

The spoon tapping device control unit 82 is a control unit for controlling the operation of the spoon tapping device 1.

The spoon tapping device control unit 82 includes a processing unit 821 and a storage unit 822 similarly to the case of the central control unit 81. The processing unit 821 includes, in detail, functional units formed of an acquisition unit 823 for acquiring various types of information and storing required information into the storage unit 822, a calculation unit 824 for calculating required information, a determination unit 825 for performing comparison or determination for the acquired information, and a decision unit 826 for deciding control results.

The spoon tapping device control unit 82 is connected to the spoon tapping device 1 subjected to the control, actually, the driving equipment 5 in a form that allows communication of information, and is connected also to the first weighing instrument 22, and the surface detection device 26 and a temperature and humidity measuring instrument 201 which are to be described later, in a form that allows communication of information.

The robot control unit 83 is a control unit for controlling the operation of the articulated robot 7.

The robot control unit 83 includes, for example, a processing unit 831 for processing various types of information.

The robot control unit 83 is connected to the articulated robot 7 subjected to the control, actually, an arm driving unit 710 of the arm portion 71 and a hand driving unit 750 of the hand portion 75 in a form that allows communication of information. The arm driving unit 710 and the hand driving unit 750 are each a unit formed of a motor, a sensor, and the like. Information on an operation range in various types of work set in advance and information such as a position of a fixed object are input in advance to the robot control unit 83.

### (Detailed Configuration of Automatic Weighing Apparatus)

Further, the automatic weighing apparatus 2 also includes, as illustrated in any of FIG. 1 to FIG. 5 and FIG. 10, the spoon gripping device 25, the surface detection equipment 26, static elimination equipment 27, the spoon supplying device 28, the console panel 29, the temperature and humidity measuring instrument 201, and the like.

The spoon gripping device 25 is a device for gripping the spoon 3.

The spoon gripping device 25 is only required to be a device capable of gripping an end portion that becomes a root of the arm portion 31 of the spoon 3 on a side opposite to the scooping portion 32.

In this embodiment, a device including a chuck mechanism which opens and closes by moving a pair of holding parts 25a in parallel in directions coming close to and separating from each other is applied as the spoon gripping device 25. Further, at least one of the pair of holding parts 25a in the spoon gripping device 25 has a linear groove portion (not shown) formed so to be fitted to the end portion that becomes the root of the arm portion 31 of the spoon 3. Further, the one of the pair of holding parts 25a has, as indicated by the broken line of FIG. 5, the positioning pin 25b provided thereon for positioning the cutout portion 39 by the positioning pin 25b coming into contact with the cutout portion 39 of the spoon 3. The positioning pin 25b is formed of, for example, a ball plunger.

The spoon gripping device 25 is mounted on, as illustrated in FIG. 4 and the like, the mounting plate 76 of the hand portion 75 in the articulated robot 7.

The surface detection equipment 26 is detection equipment for detecting a surface state of the particulate material 9 stored in the first container 21.

There is applied, as the surface detection equipment 26, equipment such as a laser sensor for measuring the surface state (storage state) of the particulate material 9 by applying laser light or a measuring instrument for performing image processing on information on an image picked up by a camera.

The surface detection equipment 26 is mounted on, for example, as illustrated in FIG. 4 and the like, the mounting plate 76 of the hand portion 75 in the articulated robot 7.

Detected information obtained by the surface detection equipment 26 is transmitted to the spoon tapping device control unit 82 of the control device 8. The spoon tapping device control unit 82 calculates and decides conditions for operating the spoon 3 by the articulated robot 7 at the time of the scooping work based on the information on the surface state detected by the surface detection equipment 26, and then transmits the operation conditions as control information to the robot control unit 83.

The static elimination equipment 27 is equipment for eliminating static electricity of an object such as the spoon 3. For example, equipment in which a corona discharge type electrode is arranged is applied as the static elimination equipment 27.

As illustrated in FIG. 1 to FIGS. 3, the static elimination equipment 27 is provided so as to be arranged at each position separated on the upper side from each of the installation position of the first container 21 and the installation position of the second container 23. Specifically, two pieces of static elimination equipment 27 are mounted at positions corresponding to a support arm 275 provided on the work table 20.

The two pieces of static elimination equipment 27 are used for static elimination of the spoon 3 before the scooping work is performed, and are further used for static elimination of the spoon 3 before the storage work of storing the particulate material 9 that has been scooped and weighed into the second container 23 is performed. Further, the two pieces of static elimination equipment 27 are provided so as to perform also static elimination of the particulate material 9 in the scooping work and the weighing work and static elimination of the first container 21 and the second container 23.

The spoon supplying device 28 includes, as illustrated in FIG. 1 to FIGS. 3, a spoon storing portion 281, a spoon collecting portion 283, and a spoon taking-out device 285. The spoon supplying device 28 is installed at a predetermined position on the top plate 20b of the work table 20.

The spoon storing portion 281 is a portion for storing a plurality of unused spoons 3 as the spoon 3.

The spoon storing portion 281 is formed of a structure which can stack and store a plurality of spoons 3 so that the uppermost spoon 3 can be taken out and used. This structure is, for example, a rack including a frame having divided storage spaces, which can stack and store the plurality of spoons 3 so that the uppermost spoon 3 can be taken out and used.

The spoon storing portion 281 is formed such that, when the number of spoons 3 to be used is large or a plurality of types of spoons 3 having different scooping amounts are to be used, the same type of spoons 3 or the different types of spoons 3 can be stored in a distinguished manner.

The spoon collecting portion 283 is a portion in which the used spoon 3 is to be collected. The spoon collecting portion 283 is formed of a box having an upper side opened as illustrated in FIG. 2 and FIGS. 3.

The spoon taking-out device 285 is a device for taking out one by one the unused spoons 3 stored in the spoon storing portion 281.

The spoon taking-out device 285 includes, as illustrated in FIG. 1 to FIGS. 3, a gripping portion 286, a support plate 287a, a raising/lowering holding portion 287b, and a horizontal movement holding portion 287c.

The gripping portion 286 is a portion for grasping one spoon 3 stacked and stored in the spoon storing portion 281. The support plate 287a is a plate member for supporting the gripping portion 286. The raising/lowering holding portion 287b is a structural portion for holding the support plate 287a (and the gripping portion 286) so as to be raised or lowered and moved in an up-and-down direction D in the vicinity of the spoon storing portion 281. The horizontal movement holding portion 287c is a structural portion for holding the raising/lowering holding portion 287b so as to be moved in a horizontal direction E along the spoon storing portion 281 on the top plate 20b of the work table 20.

The console panel 29 includes a casing 290, an input unit 291 and an output unit 292 arranged in the casing 290, and the like.

The input unit 291 is a unit for performing processing on information obtained from input equipment 29a (FIG. 2) to which a person who operates the automatic weighing apparatus 2 inputs operation information required for operating the apparatus. The output unit 292 is a unit for performing processing of displaying information, such as setting conditions, setting contents, and states, required for the operation of the automatic weighing apparatus 2 on display equipment 29b (FIG. 2) for displaying those pieces of information.

For example, switches and buttons, or a liquid crystal display panel to which an input operation can be performed is applied as the input equipment 29a. For example, lamps or a liquid crystal display panel is applied as the display equipment 29b.

The console panel 29 is installed at a location at which the person who operates the automatic weighing apparatus 2 can easily handle the console panel 29. The console panel 29 in this embodiment is arranged in a part of the cover body 20c of the work table 20.

The temperature and humidity measuring instrument 201 is an instrument for measuring the temperature and the humidity in the space surrounded by the cover body 20c of the work table 20.

The temperature and humidity measuring instrument 201 is only required to be an instrument capable of measuring the temperature and the humidity, and capable of transmitting information on the measurement results to the spoon device control unit 82. Although not shown, the temperature and humidity measuring instrument 201 is installed at a predetermined position in the space surrounded by the cover body 20c.

### (Operation of Automatic Weighing Apparatus)

Next, an operation regarding automatic weighing of the automatic weighing apparatus 2 is described.

The automatic weighing apparatus 2 is actuated in principle by performing, except for a case of performing some types of manual operations, control of various operations based on a control program and information such as related data by the central control unit 81, the spoon tapping device control unit 82, and the robot control unit 83 forming the control device 8.

First, in the automatic weighing apparatus 2, before the automatic weighing is started, the operator performs the following manual pre-weighing work.

That is, the operator places the first container 21 storing a predetermined type of particulate material 9 onto the placement stage 215 on the first weighing instrument 22, and places the empty second container 23 onto the placement stage 235 on the second weighing instrument 24.

Further, the operator stores a required number of unused spoons 3 into the spoon storing portion 281 of the spoon supplying device 28.

Moreover, the operator inputs required information, such as the type of the particulate material 9 to be subjected to automatic weighing, and a target weight of the particulate material 9 to be scooped, to the input equipment 29a of the console panel 29.

Then, after those operations of the pre-weighing work are ended, the operator operates the console panel 29 to start the automatic weighing apparatus 2.

Further, the information input to the input unit 29b formed of the input equipment 29a of the console panel 29 in the pre-weighing work is transmitted to the central control unit 81 of the control device 8. Further, required information within the input information is transmitted from the central control unit 81 also to the spoon tapping device control unit 82 and the robot control unit 83.

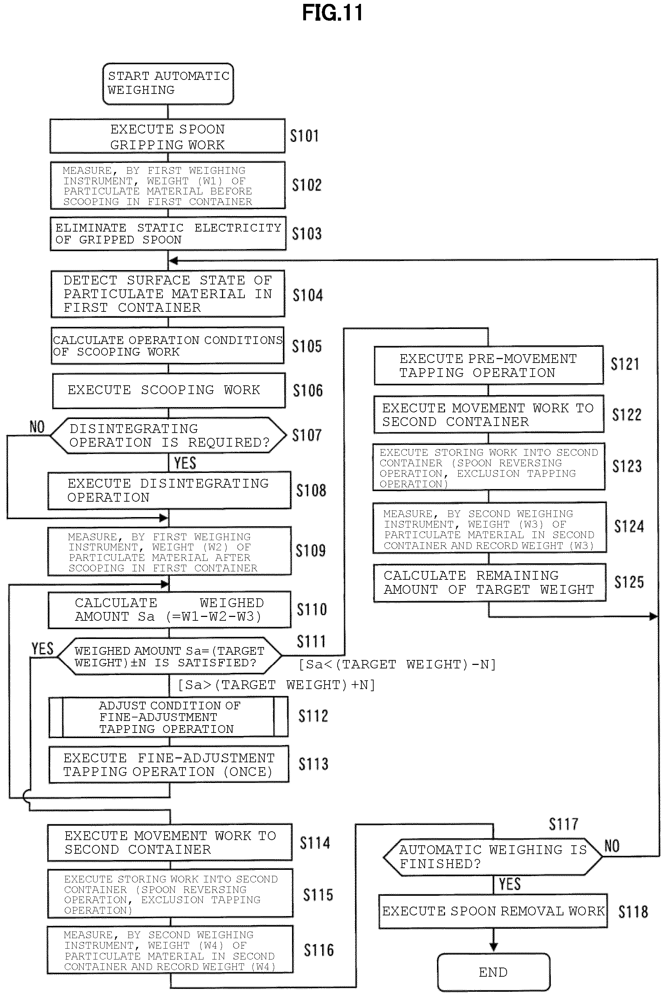

When the operation of automatic weighing is started, in the automatic weighing apparatus 2, as illustrated in FIG. 11, the articulated robot 7 and the spoon supplying device 28 are started to execute spoon gripping work of gripping the spoon 3 (Step S101).

In the gripping work, the spoon taking-out device 285 in the spoon supplying device 28 is actuated to perform work of, as illustrated in FIG. 1 and FIG. 2, taking out only one predetermined spoon 3 stored in the spoon storing portion 281, and then standing by with the spoon 3 being caused to remain still at a predetermined passing position.

Further, in the gripping work, the arm portion 71 in the articulated robot 7 is actuated so that, as illustrated in FIG. 1, FIG. 2, and FIG. 11, the hand portion 75 is moved to the passing position close to the spoon supplying device 28. After that, the spoon gripping device 25 in the hand portion 75 is actuated to perform gripping work of receiving the one spoon 3 taken out by the spoon taking-out device 285 by the holding parts 25a.

At this time, as illustrated in FIG. 5 and FIG. 18, the spoon 3 is sandwiched between the holding parts 25a of the spoon gripping device 25 while being fitted in the groove portion (not shown) of the holding part 25a, and the cut portion 39 of the spoon 3 is positioned by the positioning pin 25b on the holding part 25a. In this manner, the spoon 3 is brought to a state in which the interval R between the center of the cutout portion 39 or the center of the positioning pin 25b and the center of the knocking part 41 of the tapping tool 4 of the spoon tapping device 1 is kept constant. As a result, the spoon 3 is gripped at the same position by the spoon gripping device 25.

The spoon taking-out device 285 returns to a home position after the passing of the spoon 3 is ended. In the automatic weighing apparatus 2, the spoon taking-out device 285 is applied when this gripping work of gripping the spoon 3 is performed, and hence this gripping work can be efficiently performed.

Further, almost at the same time as the operation of Step S101, the first weighing instrument 22 measures a weight (W1) of the particulate material 9 before the scooping in the first container 21 (Step S102). Information on the weighing result (W1) obtained by the first weighing instrument 22 at this time is transmitted to the spoon tapping device control unit 82.

Subsequently, in the articulated robot 7, the arm portion 71 is actuated so that, after the hand portion 75 is moved to the vicinity of the static elimination equipment 27, static elimination work of eliminating static electricity of the gripped unused spoon 3 is performed (Step S103).

In the automatic weighing apparatus 2, this static elimination work is performed so that adhesion of the particulate material 9 to the spoon 3 with static electricity can be avoided, and the particulate material 9 can be smoothly dropped little by tapping the spoon 3 while occurrence of troubles due to the static electricity is prevented.

Subsequently, in the articulated robot 7, after the arm portion 71 is actuated so that the hand portion 75 is moved to a position opposed to the opening portion 21b of the first container 21, the surface detection equipment 26 detects the surface state of the particulate material 9 in the first container 21 (Step S104). Information on the detection result obtained by the surface detection equipment 26 at this time is transmitted to the spoon tapping device control unit 82.

At this time, in the spoon tapping device control unit 82, after the surface state of the particulate material 9 in the first container 21 is calculated from the information on the detection result obtained by the surface detection equipment 26, this information about the surface state is transmitted to the robot control unit 83. Further, when the robot control unit 83 receives the information about the surface state of the particulate material 9, the robot control unit 83 calculates the operation conditions of the articulated robot 7 at the time of the scooping work based on this information (Step S105).

In the automatic weighing apparatus 2, before the scooping work is performed, the surface state of the particulate material 9 in the first container 21 is detected and the operation conditions of the articulated robot 7 at the time of the scooping work are calculated. In this manner, in the automatic weighing apparatus 2, the scooping work can be appropriately performed in accordance with the surface state of the particulate material 9 present in the first container 21 under a state in which the opening portion 21b is tilted obliquely upward, and the subsequent change in state.

Subsequently, the articulated robot 7 executes the scooping work of scooping the particulate material 9 described below (Step S106).

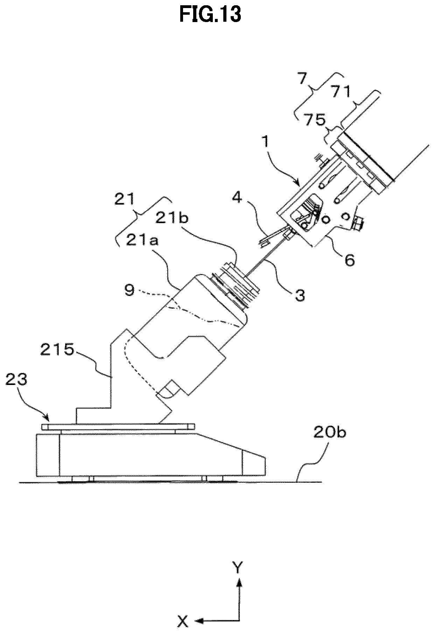

First, as illustrated in FIG. 13, the articulated robot 7 actuates the arm portion 71 so that the scooping portion 32 of the spoon 3 gripped by the spoon gripping device 25 of the hand portion 75 is caused to enter the inside of the main body portion 21a from the opening portion 21b of the first container 21.

At this time, the scooping portion 32 of the spoon 3 is caused to enter the inside of the main body portion 21a of the first container 21 so as to advance obliquely downward in parallel to the tilting state of the first container 21.

Further, at this time, the scooping portion 32 of the spoon 3 enters the inside of the main body portion 21a to reach a predetermined position, and is brought to a state in which the scooping portion 32 is inserted to reach a predetermined depth of the particulate material 9 in the main body portion 21a.

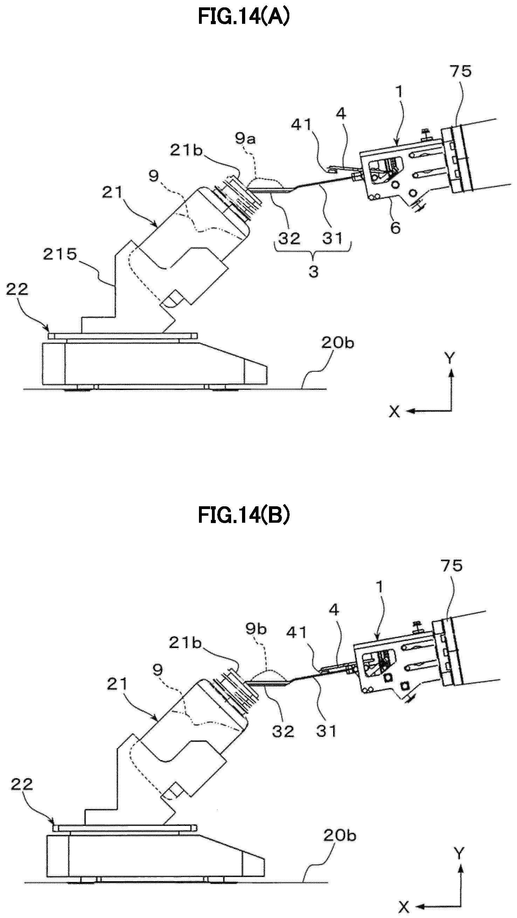

Subsequently, the articulated robot 7 actuates the arm portion 71 so that the spoon 3 is moved and caused to remain still under a state in which the scooping portion 32 (bottom surface 34) of the spoon 3 is horizontally kept. In this manner, as illustrated in FIG. 14(A), the spoon 3 is brought to a state in which a particulate material 9a scooped from the inside of the first container 21 is placed on the scooping portion 32 in a heaped state.

In this manner, the scooping work is ended.

In the automatic weighing apparatus 2, the scooping work is performed under a state in which the first container 21 is installed in a tilted posture so that the opening portion 21b thereof is directed obliquely upward.

Accordingly, as compared to a case in which the scooping work is performed under a state in which the first container 21 is installed in such a posture that the opening portion 21b thereof is directed right above, the scooping portion 32 of the spoon 3 can more easily enter the inside of the first container 21, and the scooping work of scooping the particulate material 9 from the first container 21 can be more efficiently performed.

Subsequently, after the scooping work is ended, in the spoon tapping device control unit 82, determination is made on whether or not it is required to perform a disintegrating operation of disintegrating the scooped particulate material 9 by tapping the spoon 3 by the spoon tapping device 1 (Step S107).

The determination at this time is performed based on, for example, a determination criterion that defines information such as the type of the particulate material 9 in advance.

When it is determined in Step S107 that the disintegrating operation is required to be performed, the spoon tapping device 1 executes the disintegrating operation (Step S108).

Meanwhile, when it is determined that no disintegrating operation is required to be performed, the process proceeds to the next operation of Step S109 without performing the disintegrating operation.

The disintegrating operation is executed after a second stationary operation is performed.

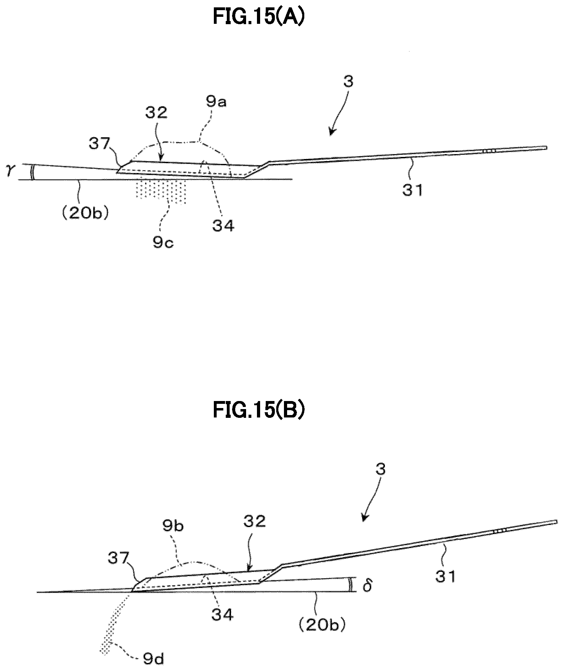

The second stationary operation is an operation for causing the articulated robot 7 to move the arm portion 71 so that, as illustrated in FIG. 15(A), the bottom surface 34 of the scooping portion 32 of the spoon 3 remains still in a posture tilted forwardly upward above the opening portion 21b of the first container 21.

The posture tilted forwardly upward at this time refers to such a posture that the bottom surface 34 of the scooping portion 32 is tilted so as to provide a rising slope that forms a predetermined angle γ with respect to the top plate 20b of the work table 20 which corresponds to the horizontal direction. Although the above-mentioned predetermined angle γ varies depending on the difference in conditions such as the type of the particulate material 9, the above-mentioned predetermined angle γ is, for example, about 5°.

After the second stationary operation is ended, the spoon tapping device 1 is actuated so that the disintegrating operation of tapping, by the tapping tool 4, the spoon 3 in the above-mentioned stationary state the number of tapping times determined in advance is performed.

The number of tapping times is set to, for example, about three times. When the number of tapping times is set to a plurality of times, the plurality of times of tapping operations are performed intermittently (for example, at intervals of about one second).

In the disintegrating operation, as exemplified in FIG. 15(A), an agglomerated state of the particulate material 9a placed in a random heaped state on the scooping portion 32 of the spoon 3 is loosened, and an excessive amount of particulate material 9c is shaken off.

In this manner, the agglomerated state of the scooped particulate material 9a is reduced on the scooping portion 32 of the spoon 3, and, as exemplified in FIG. 14(B), a particulate material 9b is brought to a state adjusted into a gentle mountain shape and is held in the scooping portion 32 of the spoon 3.

Incidentally, in principle, the particulate material 9c shaken off at the time of the disintegrating operation is dropped and returned into the first container 21. Further, when there is a fear in that a part of the particulate material 9c shaken off at this time is dropped outside of the first container 21, there may be adopted a configuration in which the particulate material 9c is captured by a capturing member (not shown) arranged on the first weighing instrument 22 so as to be present around the first container 21. When this configuration is adopted, the first weighing instrument 22 can be adapted to weigh also the part of the particulate material 9c captured by the capturing member.

In the automatic weighing apparatus 2, the disintegrating operation is performed. Thus, movement of the spoon 3 after the scooping work or the weighing work of weighing the particulate material 9, accompanying a fine-adjustment tapping operation to be performed by the spoon tapping device 1, which is to be described later, can be stably performed while unexpected dropping of the particulate material 9 from the scooping portion 32 of the spoon 3 is prevented.

Further, in the automatic weighing apparatus 2, the second stationary operation is performed before the disintegrating operation is performed. Thus, at the time of the disintegrating operation, the particulate material 9 is prevented from being dropped from the spoon 3 more than required, and the disintegrated particulate material 9 can be kept on the scooping portion 32 of the spoon 3.

Subsequently, the first weighing instrument 22 measures a weight (W2) of the particulate material 9 after scooping in the first container 21 (Step S109). Information on the weighing result (W2) obtained by the first weighing instrument 22 at this time is transmitted to the spoon tapping device control unit 82.

After the measurement of the weight (W2) of the particulate material 9 in Step S109 is ended, in the spoon tapping device control unit 82, a weighed amount Sa which is an amount of the particulate material 9 scooped in the scooping work is calculated (Step S110).

The weighed amount Sa is basically calculated by subtracting the weight W2 after scooping from the weight W1 before scooping (Sa=W1-W2).

In this case, when the process has proceeded to an operation of Step S121 and the subsequent steps to be described later, the weighed amount Sa is calculated by further additionally subtracting a weight (W3) measured by the second weighing instrument 24 in the middle of the process from the weight W1 before the scooping (Sa=W1-W2-W3). Further, when the process has proceeded to the operation of Step S121 and the subsequent steps a plurality of times, the weighed amount Sa is obtained by subtracting all of the weights (W3) of the plurality of times measured by the second weighing instrument 24 in the middle of the process.

Subsequently, in the spoon tapping device control unit 82, determination is made on whether or not the weighed amount Sa falls within an allowable range of a target weight of the particulate material to be scooped (Step S111).

The determination at this time is performed based on a determination criterion of whether or not the weighed amount Sa falls within an allowable range of (target weight)±N. The value of ±N varies depending on the difference in conditions such as the type of the particulate material 9 and the request accuracy, but, for example, the value of ±N is set to a value within a range of from ±5% to ±10%.

When there is obtained in Step S111 a determination result that the weighed amount Sa is an amount within the allowable range of (target weight)±N, the process advances to Step S114 to proceed to an operation including storing the scooped particulate material 9b into the second container 23. The operation in this case is described later.

Meanwhile, when there is obtained in Step S111 a determination result that the weighed amount Sa is an amount exceeding an upper limit value ((target weight)+N) in the allowable range of the target weight, in the spoon tapping device control unit 82, a condition of the fine-adjustment tapping operation performed by the spoon tapping device 1 is adjusted (Step S112).

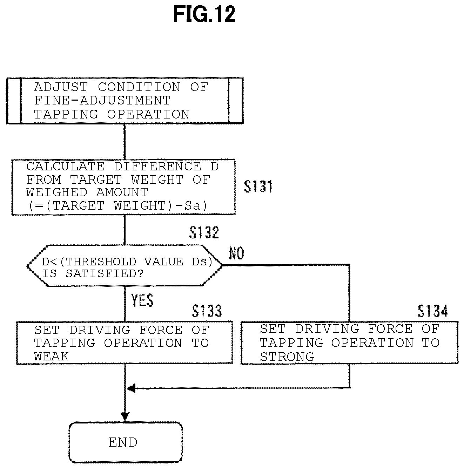

In the adjustment of the condition of the fine-adjustment tapping operation, first, as illustrated in FIG. 12, in the spoon tapping device control unit 82, a difference D (=(target weight)-Sa) of the weighed amount Sa from the target weight is calculated (Step S131), and then determination is made on whether or not this difference D is smaller than a threshold value Ds (Step S132).

For example, a value of M% of the target weight is applied as the threshold value Ds at this time. The value M% is a value larger than the above-mentioned value N (M>N). For example, a value of about 15% is applied.

When there is obtained in Step S132 a determination result that the difference D is smaller than the threshold value Ds, a condition in which a driving force at the time of the tapping operation performed by the spoon tapping device 1 is "weak" is set (Step S133). Meanwhile, when there is obtained a determination result that the difference D is equal to or larger than the threshold value Ds, a condition in which the driving force at the time of the tapping operation is "strong" is set (Step S134).

In this case, the condition in which the driving force at the time of the tapping operation is "weak" is achieved by, for example, supplying, to the driving equipment 5, electric power (actually, a drive voltage) that is relatively small as the electric power for driving the driving equipment 5 of the spoon tapping device 1. On the other hand, the condition in which the driving force at the time of the tapping operation is "strong" is achieved by, for example, supplying, to the driving equipment 5, electric power (actually, a drive voltage) that is relatively large as the electric power for driving the driving equipment 5 of the spoon tapping device 1.

The adjustment result of this condition is temporarily stored and held in the spoon tapping device control unit 82 until the condition of the next fine-adjustment tapping operation is adjusted (Step S112).

Subsequently, in the automatic weighing apparatus 2, as illustrated in FIG. 11, the spoon tapping device 1 executes the fine-adjustment tapping operation based on the adjustment result of the condition of the fine-adjustment tapping operation (Step S113).

The fine-adjustment tapping operation is an operation of intermittently tapping the part 3a of the spoon 3 by the spoon tapping device 1 to finely adjust the weighing work. In detail, the fine-adjustment tapping operation is an operation of intermittently tapping the part 3a of the spoon 3 by the spoon tapping device 1 until the weighed amount Sa at the time of subtracting the weight (W2) after scooping of the particulate material 9 from the weight (W1) before scooping of the particulate material 9 weighed by the first weighing instrument 22 reaches an amount within the allowable range of the target weight, thereby finely adjusting the weighing work.

Further, the fine-adjustment tapping operation is executed after a first stationary operation is performed.

The first stationary operation is an operation in which the articulated robot 7 moves the arm portion 71 so that, as illustrated in FIG. 15(B), the bottom surface 34 of the scooping portion 32 of the spoon 3 remains still in a posture tilted forwardly downward above the opening portion 21b of the first container 21**.**

The posture tilted forwardly downward at this time refers to such a posture that the bottom surface 34 of the scooping portion 32 is tilted so as to provide a descending slope that forms a predetermined angle δ with respect to the top plate 20b of the work table 20 which is present along the horizontal direction. Although the above-mentioned predetermined angle δ varies depending on the difference in conditions such as the type of the particulate material 9, the above-mentioned predetermined angle δ is, for example, an angle of about 10°.

After the first stationary operation is ended, the spoon tapping device 1 is actuated so that the fine-adjustment tapping operation of tapping, by the tapping tool 4, the part 3a of the spoon 3 in the above-mentioned stationary state at least once is started. The fine-adjustment tapping operation is also an operation of intermittently tapping the part 3a of the spoon 3 a plurality of times as required as described later.

In the fine-adjustment tapping operation, as exemplified in FIG. 14(B), a part (particulate material 9d) of the particulate material 9b placed in a heaped state on the scooping portion 32 of the spoon 3 collapses or slides off by receiving an impact applied at the time of tapping, and is mainly dropped through the open end 37 of the scooping portion 32.

In the automatic weighing apparatus 2, as illustrated in FIG. 8(C), the spoon 3 having the scooping portion 32 formed into a recessed shape is used. Thus, in some cases, it becomes difficult for the particulate material 9d placed on the scooping portion 32 of the spoon 3 to fall from the side surfaces 35 and 36 of the scooping portion 32 (see FIGS. 8), and the particulate material 9d is dropped from the open end 37 of the scooping portion 32 in accordance with the tapping operation in the fine-adjustment tapping operation. Regarding this point, for example, in a case in which a spoon formed of a scooping portion having no side surfaces 35 and 36 but an arc-shaped dent shape is adopted as the spoon 3, the direction in which the particulate material 9d falls from the scooping portion cannot be restricted and controlled. Thus, the amount of the particulate material 9d dropped in each time of the tapping operation in the fine-adjustment tapping operation is less likely to be adjusted and controlled.

Also in the automatic weighing apparatus 2, a part of the particulate material 9d placed on the scooping portion 32 of the spoon 3 may fall off from the side surfaces 35 and 36 of the scooping portion 32 depending on, for example, a difference in type or situation of the particulate material 9d.

Incidentally, in principle, the particulate material 9d dropped at the time of the fine-adjustment tapping operation is dropped and returned into the first container 21. Further, when there is a fear in that a part of the particulate material 9d dropped at this time is dropped outside of the first container 21, there may be employed a configuration in which the particulate material 9d is captured by the above-mentioned capturing member similarly.

In the automatic weighing apparatus 2, this fine-adjustment tapping operation is performed. Thus, the particulate material 9 scooped into the spoon 3 can be more reliably dropped little by little while agglomeration of the particulate material 9 on the scooping portion 32 of the spoon 3 is avoided, as compared to the case in which the particulate material 9 is dropped by continuously vibrating the part 3a of the spoon 3 for a predetermined time period.

Further, in the automatic weighing apparatus 2, the driving force of the driving equipment 5 which is the condition of the fine-adjustment tapping operation is adjusted. Thus, the degree of the amount, the state, or the like of the particulate material 9 to be dropped when the spoon 3 is tapped in the fine-adjustment tapping operation can be adjusted as appropriate, and hence the efficiency of the weighing can be improved.

Moreover, in the automatic weighing apparatus 2, the first stationary operation is performed before the fine-adjustment tapping operation is performed. Thus, as compared to the case in which no first stationary operation is performed, the particulate material 9 can be more stably dropped when the spoon 3 is tapped while the excess or deficiency of the dropping amount is reduced.

In the automatic weighing apparatus 2, after one tapping operation by the fine-adjustment tapping operation is ended, as illustrated in FIG. 11, the process returns to perform the operations of Step S110 and Step S111.

That is, in the automatic weighing apparatus 2, the spoon tapping device control unit 82 recalculates the weighed amount Sa which is the amount of the particulate material 9 scooped in the scooping work, and then determination is made again on whether or not the weighed amount Sa falls within the allowable range of the target weight of scooping.

At this time, the spoon tapping device control unit 82 acquires a weighing result obtained by the first weighing instrument 22 after the end of the fine-adjustment tapping operation, to set the weighing result as the weighed amount Sa subjected to the determination.

The weight (W2) after the scooping of the particulate material 9 in the first container 21 at this time is increased by the amount corresponding to the weight of the particulate material 9d (see FIG. 14(B)) which has been dropped in the one fine-adjustment tapping operation to be returned to the first container 21. Meanwhile, the weighed amount Sa acquired at this stage is reduced by the amount corresponding to the weight of the particulate material 9d which has been dropped in the one fine-adjustment tapping operation to be returned to the first container 21.

Then, when there is obtained a determination result that the weighed amount Sa is an amount within the allowable range of the target weight in Step S111 at the second time when the process returns to Step S111 again, movement work of moving the spoon 3 is executed (Step S114).

Further, even when there is obtained a determination result that the weighed amount Sa is an amount within the allowable range of the target weight in Step S111 at the first time described above (when it is determined that no fine-adjustment tapping operation is to be performed), as illustrated in FIG. 11, the process similarly proceeds to the operation of the movement work of moving the spoon 3 in Step S114.

When the process proceeds to the operation of the movement work in Step S114, regardless of the difference in process of the operation flow so far, it is regarded that the first automatic weighing has been finished.

The movement work is work of causing the articulated robot 7 to actuate the arm portion 71 to perform an operation of moving the spoon 3 from the first container 21 to the second container 23.

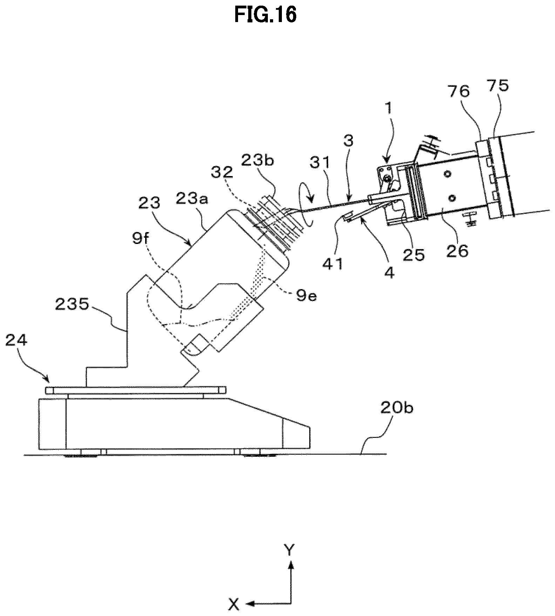

In this movement work, as exemplified in FIG. 16, the scooping portion 32 of the spoon 3 holding the scooped and weighed particulate material 9 is brought to a state in which the scooping portion 32 is inserted into the main body portion 23a from the opening portion 23b of the second container 23.

After the movement work is ended, storage work of storing the particulate material 9 into the second container 23 is executed (Step S115).

The storage work is work of causing the articulated robot 7 to actuate the hand portion 75 to perform an operation of bringing the spoon 3 to a state in which the spoon 3 is reversed upside down above the opening portion 23b of the second container 23 to store the particulate material 9 on the scooping portion 32 into the second container 23.

In this storage work, as exemplified in FIG. 16, the hand portion 75 causes the mounting plate 76 to be rotated by 180° to bring the scooping portion 32 of the spoon 3 to a state in which the upper and lower sides of the scooping portion 32 are reversed. In this manner, the particulate material 9 placed on the scooping portion 32 is dropped and stored into the main body portion 23a of the second container 23 by gravity.

Further, in this storage work, there is also performed an exclusion tapping operation of tapping the spoon 3 which has been reversed upside down by the tapping tool 4 of the spoon tapping device 1 to shake off the particulate material 9.

This exclusion tapping operation is an operation of actuating the spoon tapping device 1 to tap the part 3a of the reversed spoon 3 by the tapping tool 4 a predetermined number of tapping times. In the exclusion tapping operation, the knocking part 41 of the tapping tool 4 is knocked against the part 3a of the spoon 3 in the reversed state to tap the part 3a.

The number of tapping times at this time is set to, for example, three times or more. An interval of the plurality of times of tapping operations is freely set.

In the automatic weighing apparatus 2, the movement work and the storage work are performed. Thus, the weighed particulate material 9 can be automatically and efficiently stored in the second container 23.

Further, in the automatic weighing apparatus 2, the exclusion tapping operation is performed when the storage work is performed. Thus, while the weighed particulate material 9 is prevented from remaining on the spoon 3, the particulate material 9 can be reliably moved to the second container 23.

Moreover, in the automatic weighing apparatus 2, the storage work is performed while the second container 23 is installed in a posture tilted so that the opening portion 23b thereof is directed obliquely upward. Accordingly, as compared to a case in which the storage work is performed while the second container 23 is installed in such a posture that the opening portion 23b thereof is directed right above, the spoon 3 can more easily enter the inside of the second container 23, and hence the storage work can be more efficiently performed. Further, even when a part of the particulate material 9d at the time of being dropped and stored in the second container 23 flies into the air, because the particulate material 9d is surrounded by the inner wall of the main body portion 23a of the second container 23, the part of the particulate material 9d is prevented from escaping to the outside.

Subsequently, after the storage work of Step 115 is ended, the second weighing instrument 24 measures and records a weight (W4) of the particulate material 9 stored in the second container 23 (Step S116).

At this time, the information on the weighing result (W4) of the second weighing instrument 24 is transmitted to the central control unit 81 and the spoon tapping device control unit 82.

In the automatic weighing apparatus 2, when the information on the weighing result (W4) is obtained, the automatic weighing is once ended.

Meanwhile, in the automatic weighing apparatus 2, when there is obtained a determination result in Step S111 that the weighed amount Sa is an amount smaller than the lower limit value ((target weight)-N) of the allowable range of the target weight, as illustrated in FIG. 11, the process proceeds to perform the operations of from Step S121 to Step S125.

In this case, first, a pre-movement tapping operation is performed (Step S114). The pre-movement tapping operation is an operation of tapping, above the opening portion 21b of the first container 21, the part 3a of the spoon 3 by the tapping tool 4 of the spoon tapping device 1 a predetermined number of tapping times.

The number of tapping times at this time is set to, for example, three times or more. When the number of tapping times is set to a plurality of times, the plurality of times of tapping operations are performed at intervals of, for example, about 0.5 second.

In the automatic weighing apparatus 2, this pre-movement tapping operation is performed so that, when the spoon 3 is moved toward the second container 23 after the pre-movement tapping operation is performed, the spoon 3 can be stably moved while the unexpected dropping of the particulate material 9 from the scooping portion 32 of the spoon 3 is prevented.

Subsequently, after the pre-movement tapping operation is ended, the movement work of moving the spoon 3 to the second container 23 is performed (Step S122). After that, the storage work of storing the particulate material 9 into the second container 23 is performed (Step S123).

The movement work of Step S122 and the storage work of Step S123 are types of work similar to the movement work of Step S114 and the storage work of Step S152 described above, respectively.

With the movement work of Step S122 and the storage work of Step S123 being performed, the particulate material 9 having the weighed amount Sa which is an amount smaller than the lower limit value of the allowable range of the target weight is tentatively stored in the second container 23.

In the automatic weighing apparatus 2, the movement work and the storage work described above are performed when the weighed amount Sa is an amount smaller than the lower limit value of the allowable range of the target weight. Thus, for example, when the target weight is relatively large, the time period required for the automatic weighing can be reduced, and the efficiency of the weighing work can be improved.

Subsequently, after the movement work and the storage work are ended, the second weighing instrument 24 measures and records the weight (W3) of the particulate material 9 stored in the second container 23 (Step S124). After that, the remaining amount (R) of the target weight of the particulate material 9 is calculated (Step S125).

At this time, the information on the weighing result (W3) obtained by the second weighing instrument 24 is transmitted to the spoon tapping device control unit 82.

Further, at this time, in the spoon tapping device control unit 82, when the information on the weighing result (W3) is acquired, the information on the weighing result (W3) is temporarily stored and held in the storage unit 822. Then, the remaining amount R (=(target weight)-W3) of the target weight of the particulate material 9 is calculated, and the information on the remaining amount R is temporarily stored and held in the storage unit 822.

Then, in the automatic weighing apparatus 2, after the operations of from Step S121 to Step S125 are ended, as illustrated in FIG. 11, the process returns to Step S104. Thus, the above-mentioned operations of from Step S104 to Step S111 are similarly executed.

In this case, when it is determined in Step S111 that the weighed amount Sa falls within the allowable range of the target weight, the process proceeds to the operations of Step S114 and the subsequent steps as described above.

Further, in the automatic weighing apparatus 2, after the above-mentioned operation of Step S116 is ended, the automatic weighing that is currently in progress is ended. Thus, as illustrated in FIG. 11, the central control unit 81 of the control device 8 determines whether or not the next automatic weighing is to be performed (Step S117).

When it is determined in Step S117 that the next automatic weighing is to be performed, as illustrated in FIG. 11, the process returns to Step S104, and the operations of the steps continuing from Step S104 are similarly repeated until there is no automatic weighing to be performed next.

Further, when it is determined in Step S117 that there is no automatic weighing to be performed next, removal work of removing the spoon is performed (Step S118).

In the removal work of removing the spoon, the articulated robot actuates the arm portion 71 so that, as illustrated in FIGS. **3****,** the hand portion 75 is moved to a position directly above the spoon collecting portion 283 in the spoon supplying device 28. After that, the spoon gripping device 25 in the hand portion 75 is actuated so that the holding parts 25a release the used spoon 3. In this manner, the used spoon 3 is dropped and stored into the spoon collecting portion 283.

Through the above-mentioned operation steps, the automatic weighing by the automatic weighing apparatus 2 with respect to the same type of particulate material 9 is ended.

In this automatic weighing apparatus 2, the spoon tapping device 1 is applied. Thus, as compared to the case in which the particulate material 9 is dropped by continuously vibrating the spoon 3 for a predetermined time period, the particulate material 9 scooped into the spoon 3 can be more reliably dropped little by little while the agglomeration of the particulate material 9 scooped into the spoon 3 is avoided. As a result, the weighing of the particulate material 9 can be efficiently and reliably performed.

### (Test)

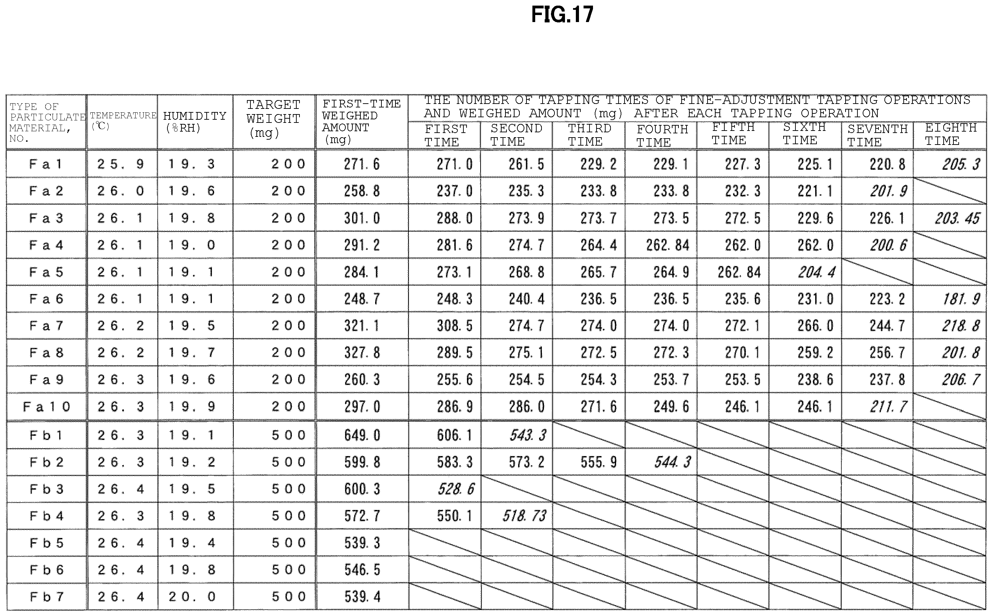

Next, description is given of a test performed when the automatic weighing of the particulate material 9 is carried out through use of the automatic weighing apparatus 2 according to the embodiment. FIG. 17 is a table for showing an example of results of the test.

In the test, the automatic weighing was performed by the automatic weighing apparatus 2 through use of two types of particulate materials 9.

The first particulate material 9 is powder formed of fine powder such as flour, and is indicated by "Fa" in the section of "TYPE OF PARTICULATE MATERIAL" in FIG. 17. Further, for the first particulate material 9 (Fa), equal amounts of particulate materials 9 (in FIG. 17, "Fa1 to Fa10") respectively stored in ten first containers 21 were prepared. The automatic weighing was individually performed while replacing the ten first containers 21.

Further, the second particulate material 9 is granules formed of small grains, and is indicated by "Fb" in the section of "TYPE OF PARTICULATE MATERIAL" in FIG. 17. Further, for the second particulate material 9 (Fb), equal amounts of particulate materials 9 (in FIG. 17, "Fb1 to Fb7") respectively stored in seven first containers 21 were prepared. The automatic weighing was individually performed while replacing the seven first containers 21.

Incidentally, the second particulate material 9 (Fb) exhibits physical properties of lower agglomeration and lower angle of repose as compared to the first particulate material 9 (Fa).

In the automatic weighing of the test, the target weight of the first particulate material 9 (Fa) was set to 200 mg, and the target weight of the second particulate material 9 (Fb) was set to 500 mg.

Further, the allowable range of the target weight was set to within a range of (target weight)±10% in both of the cases of the particulate material 9 (Fa) and the particulate material 9 (Fb) .

Moreover, the test was performed while the temperature and the humidity in the cover body 20c were measured by the temperature and humidity measuring instrument 201 so that a constant temperature (26°±1°) and a constant humidity (from 19%RH to 20%RH) were kept.

The fine-adjustment tapping operation in the test was performed when the weighed amount became a result exceeding the upper limit value ((target weight)+10%) of the allowable range of the target weight as shown in FIG. 11 as one determination result of Step S111.

Further, the fine-adjustment tapping operation at this time is ended at a stage at which the weighed amount becomes a value equal to or lower than the upper limit value ((target weight)+10%) of the allowable range of the target weight (strictly speaking, at a stage at which the weighed amount becomes a value within the range of (target weight)±10%).

The first-time weighed amount in the table of FIG. 17 corresponds to the weighed amount Sa at the time of being calculated in the operation of Step S110 of FIG. 11 after the first scooping work is performed.

Further, a part with a diagonal line in the table of FIG. 17 indicates a case in which the fine-adjustment tapping operation is unrequired and is not performed. Examples of this case include a case in which no fine-adjustment tapping operation is performed even once (for example, examples at the time of the particulate materials of from Fb5 to Fb7) and a case in which the fine-adjustment tapping operation is performed once or more.

Moreover, in the section of "THE NUMBER OF TAPPING TIMES OF FINE-ADJUSTMENT TAPPING OPERATIONS AND WEIGHED AMOUNT AFTER EACH TAPPING OPERATION" in the table of FIG. 17, the weighed amount written with italic type (oblique and slant font) in each square (cell) at the last of the results of the automatic weighing of each of the particulate materials 9 (Fa and Fb) indicates the result at the time when the weighed amount becomes an amount within the allowable range of the target weight. Further, in the same section, the weighed amount written in each square other than the square at the last of the results of the automatic weighing of each of the particulate materials 9 (Fa and Fb) indicates the result at the time when the weighed amount exceeds the upper limit value of the target weight.

In the automatic weighing of this test, operations such as the above-mentioned disintegrating operation and adjustment of the condition of the fine-adjustment tapping operation were performed as required.

In addition, it is understood from the results shown in FIG. 17 that the number of tapping times of the fine-adjustment tapping operation required to obtain such a result that the weighed amount becomes the amount within the allowable range of the target weight greatly varies depending on a difference in type (Fa or Fb) of the particulate material 9, and further the number of tapping times also varies among the particulate materials 9 of the same type.

The automatic weighing of the first particulate material 9 (Fa) required eight times of fine-adjustment tapping operations at maximum. The automatic weighing of the second particulate material 9 (Fb) required four times of fine-adjustment tapping operations at maximum.

Further, it is understood from the results shown in FIG. 17 that, for example, when the fine-adjustment tapping operation is performed, the weighing of the particulate material 9 can be efficiently and reliably performed while the particulate material 9 is adjusted to be dropped little by little from the spoon 3.

Moreover, in this test, even in the case of the first particulate material 9 (Fa) having higher agglomeration than the second particulate material 9 (Fb), when the fine-adjustment tapping operation was performed, no agglomeration phenomenon (in other words, clumping together or tightening phenomenon) occurred in the particulate material 9 placed on the spoon **3.**

Incidentally, in examples of the particulate materials of from Fb5 to Fb7, there were obtained results that the weighed amount became an amount within the allowable range of the target weight (500 mg±10%) only by the first-time scooping work, and no fine-adjustment tapping operation was required thereafter.

The following weighing was attempted as a comparative test. That is, instead of tapping the spoon 3 by the spoon tapping device 1, a vibration device was used to vibrate the spoon 3 and drop the particulate material 9 little by little.

An electromagnetic vibration feeder was used as the vibration device, and the electromagnetic vibration feeder was installed in contact with the holding parts 25a of the spoon gripping device 25. The condition of the vibration was set as follows: a periodic vibration in which an interval (period) of an amplitude of one period of the vibration became 0.1 second or less was continuously applied for two seconds.

Thus, in the comparative test, the vibration of the electromagnetic vibration feeder was applied to the spoon 3 via the holding parts 25a.

In this comparative test, it was found to be difficult to finely adjust the dropping amount of the particulate material 9 scooped into the spoon 3. For example, a weak vibration tends to cause non-movement of the particulate material 9 on the spoon 3 and difficultly of dropping, and a strong vibration tends to increase the dropping amount of the particulate material 9.

Further, in the weighing of the first particulate material 9 (Fa), the particulate material 9 (Fa) sometimes agglomerated on the plate 3 due to the vibration. Thus, particularly for the particulate material 9 of a type having high agglomeration or low flowability, it was found to be difficult to appropriately perform weighing by vibrating the spoon 3 as in the comparative test and dropping the particulate material 9 little by little while avoiding the agglomeration of the particulate material 9.

### (Modification Examples)

The present invention is not limited to the configurations exemplified as the above-mentioned embodiment, and changes such as addition, replacement, and combination of the configurations can be made as required.

When the automatic weighing apparatus 2 performs automatic weighing while changing the type of the particulate material 9 to be weighed, the automatic weighing apparatus 2 is only required to be configured as follows, for example. That is, the automatic weighing apparatus 2 in this case is configured to perform, by the articulated robot 7, before proceeding to automatic weighing for a different type, spoon replacement work of removing the used spoon 3 to store the used spoon 3 into the spoon collecting portion 283, and gripping the unused spoon 3 stored in the spoon storing portion 281.

In the case of the automatic weighing apparatus 2 configured as described above, the automatic weighing for the particulate material 9 of the different type can be efficiently performed while mixing of the particulate materials 9 of different types is avoided.

Further, when the automatic weighing apparatus 2 performs the automatic weighing of the particulate material 9 of the same type a plurality of times, the automatic weighing apparatus 2 may be configured as follows, for example. That is, the automatic weighing apparatus 2 in this case is configured to perform automatic weighing while, under a state in which a plurality of types of spoons having different sizes of the scooping portion 32 are prepared as the spoon 3, properly using the spoons 3 having different sizes in the scooping portion 32 based on information such as an actual situation of the weighing and the time limit of the weighing.

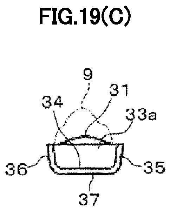

Further, in the automatic weighing apparatus 2, a spoon having a form different from the form exemplified in the embodiment may be applied as the spoon 3. Examples of the spoon having a different form include, as exemplified in FIGS. 19, a spoon 3B having a form in which the bottom surface 34 of the scooping portion 32 is substantially parallel to the longitudinal direction of the arm portion 31.

Further, in the automatic weighing apparatus 2, the first stationary operation performed in advance when the fine-adjustment tapping operation is performed may be changed to an operation of causing the bottom surface 34 of the scooping portion 32 of the spoon 3 to remain still in a posture tilted forwardly upward with respect to the horizontal direction.

In the case of such a configuration, the particulate material 9 can be stably dropped little by little in response to the tapping operation in accordance with, for example, the type and the physical property (agglomeration, flowability, or the like) of the particulate material 9.

Further, the automatic weighing apparatus 2 may be configured such that the first container 21 is installed on the placement stage 215 in such a posture that the opening portion 21b thereof is directed horizontally (directed sideways) as the entire container falls over or a posture close to this falling state (such a posture that the inclined angle with respect to the horizontal direction is smaller than 30°). Further, the automatic weighing apparatus 2 may be configured such that also the second container 23 is installed on the placement stage 235 in such a posture that the opening portion 23b thereof is directed horizontally as the entire container falls over or a posture close to this falling state (such a posture that the inclined angle with respect to the horizontal direction is smaller than 30°).

Moreover, the automatic weighing apparatus 2 may be configured such that the second container 23 is installed on the placement stage 235 in such a posture that the opening portion 23b thereof is directed right above.

The shapes, dimensions, and the like of the entire first container 21 and the entire second container 23 are not limited to the shapes, dimensions, and the like exemplified in the above-mentioned embodiment. For example, a container having a form like a laboratory dish, a petri dish, or the like may be used as the first container 21.

Further, in the automatic weighing apparatus 2, some types of equipment can be omitted or new equipment can be added so as to adapt to conditions such as differences in types and applications of the particulate material 9. For example, in the automatic weighing apparatus 2, equipment such as the static elimination equipment 27 or the spoon supplying device 28 can be omitted.

Further, the automatic weighing apparatus 2 may be configured to perform, when the amount of the particulate material 9 scooped by one scooping work is excess, for example, before the disintegrating operation is performed or instead of performing the disintegrating operation, a returning operation (excess-time returning operation) of returning a part of the scooped particulate material 9 into the first container 21 by successively tapping the spoon 3 by the spoon tapping device 1. In this excess-time returning operation, the interval of tapping the spoon 3 may be set to a relatively short condition of, for example, about 0.5 second so that the time period required for the returning operation is shortened.

Moreover, in the automatic weighing apparatus 2, the control device 8 (or the central control unit 81 thereof) may be configured to perform, after the above-mentioned storage work is performed, control of displaying, on a display unit 29a which is an example of a display device in the console panel 29, a result of comparison between the weight of the particulate material finally obtained by the first weighing instrument 22 and the weight of the particulate material measured by the second weighing instrument 24.

In the case of the automatic weighing apparatus 2 configured as described above, whether the amount of the particulate material 9 scooped from the first container 21 and weighed and the amount of the particulate material 9 stored in the second container 23 are the same as or different from each other can be checked, and whether or not all of the particulate material 9 scooped from the first container 21 is stored in the second container 23 can be known.

Further, in the above-mentioned embodiment, there is exemplified a case in which the location that is present in the intermediate section M2 out of the three sections of the arm portion 31 is adopted as the part 3a of the spoon 3 to be tapped by the spoon tapping device 1. However, for example, depending on situations such as the type of the particulate material 9 and the dropping amount of the particulate material 9 from the spoon 3, a location that is present in the root section M1 (see FIG. 8(B)), which is on a side opposite to the scooping portion 32 in the arm portion 31, may be adopted as the part 3a of the spoon 3 to be tapped.

### (Summary)

The present invention includes a third invention in which, in the spoon tapping device according to the above-mentioned first invention, the spoon includes an arm portion having a shape which is long in one direction, and a scooping portion provided with a step on one end side of the arm portion in a longitudinal direction thereof, the scooping portion including a bottom surface on which the scooped particulate material is to be placed and side surfaces which are present on both right and left sides along the one direction of the bottom surface and reach a part of the step, and the part of the spoon is a part of the arm portion.

According to the third invention, while the unexpected dropping of the particulate material from the scooping portion of the spoon is prevented, the particulate material can be stably dropped when the spoon is tapped.

The present invention includes a fourth invention in which, in the spoon tapping device according to the above-mentioned third invention, the part of the arm portion is a location present in, when a part of the arm portion excluding a part to be gripped is equally divided into three parts in the one direction, an intermediate section or a root section on a side opposite to the scooping portion.

According to the fourth invention, as compared to a case in which the part of the arm portion is a part present in a section other than the intermediate section or the root section, the action at the time of tapping the spoon is more moderately transmitted to the scooping portion without excess or deficiency, and it becomes easier to adjust the dropping state of the particulate material.

The present invention includes a fifth invention in which, in the spoon tapping device according to the above-mentioned third invention, the movable arm is formed as an arm having a shape in which the arm linearly extends with a distance from the arm portion of the spoon, and is then bent so as to reach a position above the part of the arm portion, and the knocking part is mounted on a terminal portion provided beyond a bent part of the movable arm.

According to the fifth invention, occurrence of unexpected contact with the spoon when the tapping tool taps the spoon can be prevented, and the tapping tool is less liable to interfere with the spoon when the spoon is held.

The present invention includes a sixth invention in which, in the spoon tapping device according to the above-mentioned first invention, the driving equipment is configured to change a driving force at the time of tapping the part of the spoon.

According to the sixth invention, the dropping amount of the particulate material when the spoon is tapped can be adjusted.

The present invention includes a seventh invention in which, in any one of the spoon tapping devices according to the above-mentioned first invention, the spoon, the tapping tool, and the driving equipment are held by an articulated robot.

According to the seventh invention, through use of the movement of the articulated robot, the scooping work of scooping the particulate material with the spoon and the dropping work of dropping little by little the scooped particulate material from the spoon can be smoothly performed while accurate movement and keeping of the stop posture are ensured.

Further, the present invention includes an eighth invention in which, in the automatic weighing apparatus according to the above-mentioned second invention, the control device is configured to adjust a condition of a first-time or next-time fine-adjustment tapping operation to be performed by the tapping device in accordance with a result of comparison between the weighed amount obtained from a weighing result by the first weighing instrument when the particulate material is first scooped from the first container and the allowable range of the target weight, or a result of comparison between the weighed amount obtained from the weighing result by the first weighing instrument each time the spoon is tapped once in the fine-adjustment tapping operation and the allowable range of the target weight.

According to the eighth invention, the conditions of the first-time or next-time fine-adjustment tapping operation are adjusted to conditions adapted to the situation of the weighed amount, and hence accurate and efficient weighing can be performed.

The present invention includes a ninth invention in which, in the automatic weighing apparatus according to the above-mentioned second invention, the automatic weighing apparatus further includes surface detection equipment configured to detect a surface state of the particulate material stored in the first container, and the control device is configured to control the articulated robot so as to adjust movement of the spoon at the time of the scooping work based on information on the surface state detected by the surface sensing equipment.

According to the ninth invention, appropriate scooping work can be performed in accordance with the change in surface state of the particulate material stored in the first container.

The present invention includes a tenth invention in which, in the automatic weighing apparatus according to the above-mentioned second invention, the automatic weighing apparatus further includes static elimination equipment configured to eliminate static electricity of the spoon, and the control device is configured to control the articulated robot to perform static elimination work of eliminating the static electricity of the spoon by the static elimination equipment before the scooping work is performed through use of an unused spoon as the spoon.

According to the tenth invention, adhesion of the particulate material to an unnecessary part of the spoon due to static electricity can be avoided. Further, the particulate material can be smoothly dropped little by little by tapping the spoon.

The present invention includes an eleventh invention in which, in the automatic weighing apparatus according to the above-mentioned second invention, the control device is configured to control the articulated robot to perform a first stationary operation before the fine-adjustment tapping operation is performed, the first stationary operation being an operation of causing the spoon to remain still in such a posture that a part of the spoon on which the particulate material is placed is tilted forwardly downward or upward with respect to a horizontal direction.

According to the eleventh invention, the particulate material can be more smoothly or stably dropped when the spoon is tapped as compared to the case in which, before the fine-adjustment tapping operation is performed, the spoon is not caused to remain still in such a posture that a part thereof on which the particulate material is placed is tilted forwardly downward or upward with respect to the horizontal direction.

The present invention includes a twelfth invention in which, in the automatic weighing apparatus according to the above-mentioned second invention, the control device is configured to control the spoon tapping device to perform a disintegrating operation after the particulate material is scooped in the scooping work, the disintegrating operation being an operation of disintegrating the scooped particulate material by tapping the spoon.

According to the twelfth invention, the movement of the spoon after the scooping work and weighing of the particulate material accompanying the fine-adjustment tapping operation can be stably performed while the unexpected dropping of the particulate material from the spoon is prevented.

The present invention includes a thirteenth invention in which, in the automatic weighing apparatus according to the above-mentioned twelfth invention, the control device is configured to control the articulated robot to perform a second stationary operation before the disintegrating operation is performed, the second stationary operation being an operation of causing the spoon to remain still in such a posture that a part of the spoon on which the particulate material is placed is tilted forwardly upward with respect to the horizontal direction.

According to the thirteenth invention, excessive dropping of the particulate material is prevented at the time of the disintegrating operation, and the disintegrated particulate material can be caused to stay on the spoon.

The present invention includes a fourteenth invention in which, in the automatic weighing apparatus according to the above-mentioned second invention, the control device includes a second container configured to store the particulate material that has been scooped in the spoon and weighed, and is configured to control the articulated robot to perform movement work of moving the spoon from the first container to the second container and storage work of storing the particulate material into the second container by bringing the spoon moved to the second container to a state in which the spoon is reversed upside down above the second container.

According to the fourteenth invention, the weighed particulate material can be automatically and efficiently stored into the second container.

The present invention includes a fifteenth invention in which, in the automatic weighing apparatus according to the above-mentioned fourteenth invention, the control device is configured to control the spoon tapping device to perform, when the storage work is performed, an exclusion tapping operation of shaking off the particulate material by tapping the spoon reversed upside down.

According to the fifteenth invention, while the weighed particulate material is prevented from remaining on the spoon, the particulate material can be reliably moved to the second container.

The present invention includes a sixteenth invention in which, in the automatic weighing apparatus according to the above-mentioned second invention, the automatic weighing apparatus further includes: a spoon storing portion configured to store a plurality of unused spoons as the spoon; and a spoon collecting portion configured to collect a used spoon, and the control device is configured to control the articulated robot to perform spoon replacement work of, when a type of the particulate material to be weighed is changed, removing the used spoon to store the used spoon into the spoon collecting portion, and gripping an unused spoon stored in the spoon storing portion.

According to the sixteenth invention, automatic weighing of particulate materials of different types can be efficiently performed while the mixing of the particulate materials of the different types is avoided.

The present invention includes a seventeenth invention in which, in the automatic weighing apparatus according to the above-mentioned sixteenth invention, further including a spoon taking-out device configured to take out one by one the plurality of unused spoons stored in the spoon storing portion, and the control device is configured to, when the replacement work is performed: control the spoon taking-out device to perform a taking-out operation of taking out the unused spoon from the spoon storing portion; and control the articulated robot to perform a gripping operation of gripping the unused spoon taken out by the spoon taking-out device.

According to the seventeenth invention, the replacement work with the unused spoon can be smoothly performed.

### Reference Signs List

1 spoon tapping device
2 automatic weighing apparatus
3 spoon
3a part of spoon
4 tapping tool
5 driving equipment
7 articulated robot
8 control device
9 particulate material
21 first container
21b opening portion
22 first weighing instrument
23 second container
23b opening portion
24 second weighing instrument
26 surface detection equipment
27 static elimination equipment
29a display unit (one example of display device)
31 arm portion
32 scooping portion
34 bottom surface
35, 36 side surface
41 knocking part
42 movable arm
42e terminal portion
281 spoon storing portion
283 spoon collecting portion
285 spoon taking-out device
MH part to be gripped
M1 root section
M2 intermediate section

## Claims

1. A spoon tapping device, comprising:
a spoon configured to scoop a particulate material;
a tapping tool configured to tap a part of the spoon from above; and
driving equipment configured to drive the tapping tool so as to tap the part of the spoon,
wherein the tapping tool includes a knocking part to be knocked against the part of the spoon, and a movable arm configured to move under a state in which the knocking part is mounted thereon so that the knocking part is knocked against the part of the spoon, and
wherein the driving equipment is configured to move, when the particulate material scooped into the spoon is to be dropped little by little, the movable arm so that the knocking part intermittently knocks the part of the spoon.

2. The spoon tapping device according to claim 1,
wherein the spoon includes an arm portion having a shape which is long in one direction, and a scooping portion provided with a step on one end side of the arm portion in a longitudinal direction thereof, the scooping portion including a bottom surface on which the scooped particulate material is to be placed and side surfaces which are present on both right and left sides along the one direction of the bottom surface and reach a part of the step, and
wherein the part of the spoon is a part of the arm portion.

3. The spoon tapping device according to claim 2, wherein the part of the arm portion is a location present in, when a part of the arm portion excluding a part to be gripped is equally divided into three parts in the one direction, an intermediate section or a root section on a side opposite to the scooping portion.

4. The spoon tapping device according to claim 2,
wherein the movable arm is formed as an arm having a shape in which the arm linearly extends with a distance from the arm portion of the spoon, and is then bent so as to reach a position above the part of the arm portion, and
wherein the knocking part is mounted on a terminal portion provided beyond a bent part of the movable arm.

5. The tapping device according to claim 1, wherein the driving equipment is configured to change a driving force at the time of tapping the part of the spoon.

6. The tapping device according to claim 1, wherein the spoon, the tapping tool, and the driving equipment are held by an articulated robot.

7. An automatic weighing apparatus, comprising:
a first container in which the particulate material is to be stored;
a spoon configured to scoop the particulate material from the first container;
an articulated robot configured to grip the spoon and move so as to perform a plurality of types of work including scooping work of scooping the particulate material from the first container;
the spoon tapping device of any one of claims 1 to 6, which is mounted on the articulated robot, and is configured to tap a part of the spoon from above when the particulate material scooped into the spoon is to be dropped into at least the first container;
a first weighing instrument configured to measure a weight of the particulate material stored in the first container; and
a control device configured to control an operation of the articulated robot and an operation of the spoon tapping device,
wherein the control device is configured to perform control so that a fine-adjustment tapping operation of intermittently tapping the part of the spoon by the spoon tapping device to perform fine adjustment is performed until a weighed amount obtained by subtracting a weight after scooping of the particulate material from a weight before the scooping of the particulate material, which are measured by the first weighing instrument, reaches an amount within an allowable range of a target weight.

8. The automatic weighing apparatus according to claim 7, wherein the control device is configured to adjust a condition of a first-time or next-time fine-adjustment tapping operation to be performed by the tapping device in accordance with a result of comparison between the weighed amount obtained from a weighing result by the first weighing instrument when the particulate material is first scooped from the first container and the allowable range of the target weight, or a result of comparison between the weighed amount obtained from the weighing result by the first weighing instrument each time the spoon is tapped once in the fine-adjustment tapping operation and the allowable range of the target weight.

9. The automatic weighing apparatus according to claim 7, further comprising surface detection equipment configured to detect a surface state of the particulate material stored in the first container,
wherein the control device is configured to control the articulated robot so as to adjust movement of the spoon at the time of the scooping work based on information on the surface state detected by the surface sensing equipment.

10. The automatic weighing apparatus according to claim 7, further comprising static elimination equipment configured to eliminate static electricity of the spoon,
wherein the control device is configured to control the articulated robot to perform static elimination work of eliminating the static electricity of the spoon by the static elimination equipment before the scooping work is performed through use of an unused spoon as the spoon.

11. The automatic weighing apparatus according to claim 7, wherein the control device is configured to control the articulated robot to perform a first stationary operation before the fine-adjustment tapping operation is performed, the first stationary operation being an operation of causing the spoon to remain still in such a posture that a part of the spoon on which the particulate material is placed is tilted forwardly downward or upward with respect to a horizontal direction.

12. The automatic weighing apparatus according to claim 7, wherein the control device is configured to control the spoon tapping device to perform a disintegrating operation after the particulate material is scooped in the scooping work, the disintegrating operation being an operation of disintegrating the scooped particulate material by tapping the spoon.

13. The automatic weighing apparatus according to claim 12, wherein the control device is configured to control the articulated robot to perform a second stationary operation before the disintegrating operation is performed, the second stationary operation being an operation of causing the spoon to remain still in such a posture that a part of the spoon on which the particulate material is placed is tilted forwardly upward with respect to the horizontal direction.

14. The automatic weighing apparatus according to claim 7, further comprising a second container configured to store the particulate material that has been scooped in the spoon and weighed,
wherein the control device is configured to control the articulated robot to perform movement work of moving the spoon from the first container to the second container, and storage work of storing the particulate material into the second container by bringing the spoon moved to the second container to a state in which the spoon is reversed upside down above the second container.

15. The automatic weighing apparatus according to claim 14, wherein the control device is configured to control the spoon tapping device to perform, when the storage work is performed, an exclusion tapping operation of shaking off the particulate material by tapping the spoon reversed upside down.

16. The automatic weighing apparatus according to claim 7, further comprising:
a spoon storing portion configured to store a plurality of unused spoons as the spoon; and
a spoon collecting portion configured to collect a used spoon,
wherein the control device is configured to control the articulated robot to perform spoon replacement work of, when a type of the particulate material to be weighed is changed, removing the used spoon to store the used spoon into the spoon collecting portion, and gripping an unused spoon stored in the spoon storing portion.

17. The automatic weighing apparatus according to claim 16, further comprising a spoon taking-out device configured to take out one by one the plurality of unused spoons stored in the spoon storing portion,
wherein the control device is configured to, when the replacement work is performed:
control the spoon taking-out device to perform a taking-out operation of taking out the unused spoon from the spoon storing portion; and
control the articulated robot to perform a gripping operation of gripping the unused spoon taken out by the spoon taking-out device.
